# EUROPÄISCHE PATENTSCHRIFT

(11) **EP 3 265 756 B1**
(45) Veröffentlichungstag und Bekanntmachung des Hinweises auf die Patenterteilung: **16.10.2019**
(21) Anmeldenummer: 16707432.7
(22) Anmeldetag: 02.03.2016
(51) Int. Cl.: G01D 5/244, G01B 21/04, G01B 21/22

(54) **ANORDNUNG ZUR ERMITTLUNG EINES BEWEGUNGSFEHLERS EINER DREHVORRICHTUNG**
ASSEMBLY FOR DETERMINING A MOVEMENT FAULT OF A ROTATING DEVICE
SYSTÈME PERMETTANT DE DÉTERMINER UNE ERREUR DE MOUVEMENT D'UN DISPOSITIF DE ROTATION

(30) Priorität: 02.03.2015 DE 102015203698
(43) Veröffentlichungstag der Anmeldung: 10.01.2018
(73) Patentinhaber: Carl Zeiss Industrielle Messtechnik GmbH, 73447 Oberkochen (DE)
(72) Erfinder: SAGEMÜLLER, Rainer, 73434 Aalen (DE); SEITZ, Dominik, 73525 Schwäbisch Gmünd (DE)
(74) Vertreter: Patentanwälte Bressel und Partner mbB
(86) Internationale Anmeldenummer: PCT/EP2016/054364
(87) Internationale Veröffentlichungsnummer: WO 2016/139220

(56) Entgegenhaltungen:
- EP-A2- 2 246 669
- WO-A1-2013/007286
- DE-B3-102013 200 210

## Beschreibung

Die vorliegende Erfindung betrifft eine Anordnung zur Ermittlung eines Bewegungsfehlers einer Drehvorrichtung

Drehvorrichtungen mit einem um eine Drehachse drehbaren Teil, wie beispielsweise Drehvorrichtungen für ein Koordinatenmessgerät, weisen Bewegungsfehler, also Abweichungen von der gewünschten, idealen Drehbewegung des Teils (insbesondere eines Rotors) in allen sechs Bewegungsfreiheitsgraden auf. Unterschieden werden drei translatorische und drei rotatorische Freiheitsgrade. Bewegungsfehler sind beispielsweise bedingt durch die Mechanik der Drehvorrichtung, insbesondere durch die Lagerung / Führung der um die Drehachse drehbaren Teile der Drehvorrichtung, oder durch externe auf die Drehachse wirkende Kräfte oder Momente. Kräfte und Momente können dabei statisch oder dynamisch wirken.

Zur Qualifizierung von Drehachsen (Annahmeprüfung) oder zur Datenaufnahme für eine rechnerische Korrektur der Bewegungsfehler (Computer Aided Accuracy Korrektur) müssen die Bewegungsfehler der Drehachse ermittelt werden.

Die WO 2013/007286 A1 schildert ein Verfahren zum Kalibrieren einer Messanordnung zum Bestimmen von Drehpositionen einer Drehvorrichtung, die einen ersten Teil und einen relativ zu dem ersten Teil um eine Drehachse drehbaren zweiten Teil aufweist,
wobei:
- Drehpositionen des ersten Teils relativ zu dem zweiten Teil und/oder Drehpositionen des zweiten Teils relativ zu dem ersten Teil mit einer Mehrzahl von Sensoren erfasst werden, die um die Drehachse herum verteilt angeordnet sind, und jeweils ein der erfassten Drehposition entsprechendes Messsignal erzeugt wird, sodass redundante Informationen über die Drehpositionen des ersten Teils und zweiten Teils relativ zueinander vorliegen,
- die redundanten Informationen über die Drehposition(en) derart ausgewertet werden, dass Effekte einer translatorischen Bewegung des ersten und des zweiten Teils relativ zueinander korrigiert werden, wobei die translatorische Bewegung quer zur Erstreckung der Drehachse (D) verläuft.

Die DE 10 2013 200 210 B3 beschreibt ein Halteelement zum Halten einer Drehvorrichtung, die ein bezüglich einer Drehachse drehbares Teil aufweist, oder die eine Mehrzahl von um Drehachsen drehbare Teile aufweist, oder zum Halten einer Sensoranordnung, die eine Mehrzahl Sensoren aufweist, wobei die Sensoren ausgestaltet sind, Abweichungen bezüglich zumindest eines Bewegungs-Freiheitsgrades der Drehvorrichtung zu messen, wobei das Halteelement aufweist:
- eine erste Halterung zum Halten der Drehvorrichtung oder Sensoranordnung,
- einen Träger, an dem die erste Halterung befestigt ist, wobei der Träger zumindest einen ersten Kopplungsbereich und einen zweiten Kopplungsbereich aufweist, über die das Halteelement an eine Basis ankoppelbar ist, und wobei der erste Kopplungsbereich ausgestaltet ist, das Halteelement in einer ersten Position und/oder Orientierung an der Basis anzukoppeln, sodass die von dem Halteelement gehaltene Drehvorrichtung oder Sensoranordnung bei Ankopplung des ersten Kopplungsbereichs an der Basis in einer ersten Position und/oder Orientierung angeordnet ist, und wobei der zweite Kopplungsbereich ausgestaltet ist, das Halteelement in einer zweiten Position und/oder Orientierung an der Basis anzukoppeln, sodass die von dem Halteelement gehaltene Drehvorrichtung oder Sensoranordnung bei Ankopplung des zweiten Kopplungsbereichs an der Basis in einer zweiten Position und/oder Orientierung angeordnet ist.

Die DE 10 2009 019 172 A1 und EP 2 246 669 A2 offenbaren einen kapazitiven Drehsensor zum Erfassen der Position eines sich relativ zu einem stationären Objekt bewegenden Objekts, bestehend aus einer drehbar in einem Gehäuseflansch gelagerten Welle, die drehfest mit einem Rotor verbunden ist, dem durch einen Luftspalt getrennt gegenüberliegend ein Stator zugeordnet ist, wobei mindestens Rotor, der Stator und eine Auswerteschaltung von einer elektrisch leitfähigen Kappe umgeben sind, wobei an der Unterseite einer Leiterplatte eine Statorfläche angeordnet ist und dass der Statorfläche gegenüberliegend und durch den Luftspalt getrennt eine nicht-rotationssymmetrische Rotorscheibe zugeordnet ist, die ihrerseits auf einem Rotorträger befestigt ist, welcher Rotorträger drehfest am Außenumfang Welle hochgenau befestigt ist.

Ein bewährtes Verfahren zur Qualifizierung von Drehachsen ist in "Precision Spindle Metrology" von Eric R. Marsh, Destech Pubns Inc; Auflage: 2 (16. November 2009, ISBN-13: 978-1605950037) beschrieben. Dabei wird ein Doppelkugelstab (Target, spezieller Messkörper) zentrisch auf der zu prüfenden Drehachse befestigt. Anschließend wird die Drehung gestartet und die Bewegungen der Kugeln von 5 Sensoren erfaßt. Dabei sind pro Kugel jeweils 2 Sensoren unter 90° am Äquator angeordnet und der 5. Sensor blickt auf den Pol der oberen Kugel. Die Sensoren werden von einer Haltervorrichtung, auch als "Probenest" bezeichnet, gehalten, welches vorzugsweise z.B. an der Pinole eines Koordinatenmessgeräts befestigt ist. Auf diese Weise können die Bewegungsfehler einer Drehachse in fünf Fehlerfreiheitsgraden bestimmt werden. Für den sechsten Freiheitsgrad (Positionsfehler, Winkelfehler) sind andere Prüfverfahren erforderlich. Auch in der internationalen Patentanmeldung WO2013007285 ist ein derartiger Messaufbau mit einem Doppelkugelstab offenbart.

Das oben genannte Verfahren hat folgende Nachteile:
- Die Formabweichungen der Prüfkugeln gehen als Fehler in das Qualifizierungsergebnis ein. Aus diesem Grund müssen sehr runde Kugeln verwendet werden, die entsprechend empfindlich und teuer sind. Die Prüfkugeln müssen von der Prüfmittelüberwachung überwacht werden und zyklisch kalibriert werden. Oder es muss der Formfehler der Kugel erfasst und rechnerisch berücksichtigt werden.
- Je nach verwendetem Sensor müssen die Prüfkugeln entweder eine reflektierende Oberfläche oder eine metallische Oberfläche aufweisen. Solch hochwertige Kugeln sind schwer zu beschaffen.
- Die Kugeln müssen möglichst gut auf der Drehachse zentriert werden um im Messbereich der Sensoren zu bleiben und um den Linearitätsfehler bei der Messung möglichst gering zu halten. Gerade bei kapazitiven Sensoren, die an sich gut geeignet sind, ist der Messbereich häufig nur einige 10µm groß und die Sensoren haben starke Linearitätsabweichungen. Der Zentrierung erfordert Erfahrung und ist zeitaufwendig.
- Zur Halterung des Probenests ist ein Koordinatenmessgerät ideal, da mit diesem das Probenest feinfühlig in allen drei Raumrichtungen bewegt werden kann. Steht kein KMG zur Verfügung, wird eine galgenartige Halterung, wie Galgen, verwendet. Ohne feinfühlige, motorische Achsen ist die Positionierung des Probenests schwierig und erfordert Erfahrung.
- Je nach Größe/Durchmesser der Planscheibe der Drehachse sind unterschiedlich lange Ausleger der Haltestruktur (z.B. Galgen) erforderlich.
- Innerhalb des Probenests müssen alle fünf Sensoren auf die Kugeln ausgerichtet werden. Soll das gleiche Probenest für verschiedene Targets (jede Drehachse erfordert ein anders gestaltetes Target (Doppelkugelstab) verwendet werden, müssen auch die Sensoren innerhalb des Probenests aufwendig nachjustiert werden.
- Nicht immer kann das Probenest an der Pinole eines KMG befestigt werden, da die Pinole, vor allem bei Groß-KMGs, oft zu kurz oder auch zu lang sein kann.

Aufgabe der vorliegenden Erfindung ist es, für eines oder mehrere dieser Probleme eine Lösung anzugeben. Es sollte eine Anordnung und ein Verfahren angegeben werden, mit der/dem ein Bewegungsfehler einer Drehvorrichtung auf einfache Art und Weise und mit möglichst einfachem apparativem Aufbau ermittelbar ist.

Nach einer grundlegenden Idee der Erfindung wird eine Bewegungsermittlungseinrichtung, mit der ein Bewegungsfehler feststellbar ist, so angeordnet, dass die Bewegungsermittlungseinrichtung bei der Ermittlung des Bewegungsfehlers nicht um die Drehachse der Drehvorrichtung rotiert wird. Sofern die Bewegungsermittlungseinrichtung aus mehreren Teilen, Elementen oder Komponenten aufgebaut ist, wie beispielsweise Sensor und zugeordneter Messkörper oder Messeinrichtung und zugeordneter Prüfkörper, wird bei der Ermittlung eines Bewegungsfehlers keine der Komponenten oder keines der Teile um die Drehachse der Drehvorrichtung rotiert.

Um das vorangehend beschriebene Prinzip zu verwirklichen, wird ein Rotor einer Drehvorrichtung, deren Bewegungsfehler ermittelt werden soll, von einer Bewegungsermittlungseinrichtung derart entkoppelt, dass eine Drehbewegung des Rotors um die vorgesehene Rotordrehachse nicht auf die Bewegungsermittlungseinrichtung, oder auf einen Teil, ein Element oder eine Komponente davon, übertragen wird. Zu diesem Zweck wird eine Entkopplungseinrichtung verwendet, welche eine Drehbewegung um die Rotordrehachse entkoppelt, aber Bewegungen in anderen Freiheitsgraden zulässt, damit ein Bewegungsfehler ermittelt werden kann. Insbesondere ist eine Entkopplungseinrichtung ein nachfolgend noch beschriebenes Drehlager.

In oben beschriebenem Stand der Technik erfolgt eine Messung von Bewegungsfehlern dadurch, dass ein Prüfkörper, auch bezeichnet als Messkörper oder Target, auf einem Rotor einer Drehvorrichtung, deren Bewegungsfehler ermittelt werden soll, angeordnet wird und bei der Messung von Bewegungsfehlern mit dem Rotor mit dreht. Eine solche Rotation eines Messkörpers ist gemäß oben dargestelltem Prinzip der Erfindung nicht erforderlich. Die Rotation des Messkörpers im Stand der Technik bedingt in der Regel eine rotationssymmetrische Form des Messkörpers, worauf in der vorliegenden Erfindung verzichtet werden kann, da keine Rotation eines Messkörpers, oder einer dem Messkörper zugeordneten Messeinrichtung, erfolgt. Die vorliegende Erfindung bietet gegenüber oben dargestelltem Stand der Technik in ihrer allgemeinen Form oder in speziellen Ausführungsformen, die nachfolgend noch beschrieben werden, ein oder mehrere der folgenden Vorteile:
- Anstelle rotationssymmetrischer Messkörper, wie beispielsweise kugelförmiger Messkörper, können einfache und kostengünstige plane Messkörper, beispielsweise Planspiegel, verwendet werden.
- Da auf rotationssymmetrische Messkörper verzichtet werden kann, kann auf eine hochgenaue und aufwendige Zentrierung des Messkörpers bezüglich der Drehachse verzichtet werden. Eine Bewegungsermittlungseinrichtung, die einen vereinfachten Messkörper aufweist, kann einfacher aufgebaut werden, ohne oder mit weniger Justierungsarbeit relativ zu der zu prüfenden Drehvorrichtung.
- Das Ausrichten von einer oder mehreren Messeinrichtungen relativ zu einem Messkörper wird erheblich vereinfacht.
- Es sind keine Haltekonstruktionen mit langen Auslegern, wie Galgen, und kein Koordinatenmessgerät zur Halterung von Sensoren zur Bewegungsmessung erforderlich. Insbesondere ist keine über eine Drehvorrichtung kragende oder über einer Drehvorrichtung angeordnete Haltevorrichtung erforderlich.
- Es ist keine verstellbare Haltekonstruktion erforderlich, deren Ausrichtung verstellbar ist, oder woran eine Sensorausrichtung- oder -lage verstellbar ist.

Ein Bewegungsfehler ist eine Abweichung von der gewünschten idealen Drehbewegung eines Teils einer Drehvorrichtung, insbesondere des Rotors, in einem Bewegungsfreiheitsgrad.

Es existieren drei translatorische Bewegungsfehler, die bezüglich der drei kartesischen Koordinatenachsen X, Y und Z, als Tx, Ty und Tz bezeichnet werden. Es existieren drei rotatorische Bewegungsfehler, die bezüglich der kartesischen Koordinatenachsen X und Y als Rx und Ry und bezüglich der kartesischen Koordinatenachse Z als Rz bezeichnet werden.

Derjenige rotatorische Bewegungsfehler um einer kartesische Koordinatenachse, die parallel oder fluchtend mit der vorgesehenen Drehachse der Drehvorrichtung, insbesondere einer Rotordrehachse, ist, wird als Drehpositionsfehler, oder verkürzt "Positionsfehler" bezeichnet. Sofern die Drehachse in Z-Richtung eines kartesischen Koordinatensystems ausgerichtet ist, ist also der Bewegungsfehler Rz der Drehpositionsfehler. Selbstverständlich sind andere Ausrichtungen der Drehachse in eine andere Richtung des kartesischen Koordinatensystems möglich, beispielsweise eine horizontale Ausrichtung. Bei einer Ausrichtung der Drehachse in Y-Richtung eines vorgegebenen Koordinatensystems würde der Drehpositionsfehler mit Ry, bei einer Ausrichtung in X-Richtung mit Rx bezeichnet. Der Drehpositionsfehler hat zur Folge, dass bei einer (gewünschten) Rotation eines Rotors der Drehvorrichutung um die Rotordrehachse der Rotor eine andere als die gewünschte Drehposition einnimmt, beispielsweise eine andere Position als die gewünschte Position auf einer Drehwinkelskala.

In der vorliegenden Erfindung können einer oder mehrere Bewegungsfehler ermittelt werden, die nicht dem Drehpositionsfehler entsprechen. Die ermittelbaren Bewegungsfehler sind also ausgewählt aus einem oder mehreren der folgenden Bewegungsfehler: translatorische Bewegungsfehler in beliebiger Richtung und rotatorische Bewegungsfehler um Raumachsen, die quer, insbesondere senkrecht, zu der Rotordrehachse der Drehvorrichtung sind.

Beispiele für Drehvorrichtungen sind Drehgelenke, Drehschwenk-Gelenke, die mehrere Drehachsen aufweisen, und Drehtische. Die Erfindung bezieht sich insbesondere auf Drehvorrichtungen, die in Koordinatenmessgeräten (nachfolgend abgekürzt als KMG), Werkzeugmaschinen, Robotern und anderen Anwendungen, bei denen es auf hohe Genauigkeit ankommt, einsetzbar bzw. speziell für solche Zwecke ausgebildet sind. Die Drehvorrichtung ist insbesondere eine Drehvorrichtung für ein KMG, insbesondere ein Drehtisch, ein Drehgelenk, oder ein Drehschwenk-Gelenk für ein KMG. Die Drehvorrichtung wird auch als Prüfling bezeichnet. Die Drehvorrichtung kann ein Drehtisch mit einem rotationssymmetrischen Rotor sein.

Angegeben wird von der Erfindung insbesondere eine Anordnung zur Ermittlung eines Bewegungsfehlers einer Drehvorrichtung, aufweisend
- eine Drehvorrichtung, deren Bewegungsfehler ermittelt werden soll, aufweisend einen Rotor, der um eine Rotordrehachse drehbar ist, und einen Stator
- ein Drehlager, aufweisend ein erstes Lagerteil und ein zweites Lagerteil, die relativ zueinander drehbar sind, wobei das erste Lagerteil bewegungsfest an den Rotor der Drehvorrichtung gekoppelt ist und das zweite Lagerteil relativ zu dem Rotor der Drehvorrichtung drehbar ist,
- eine Drehbegrenzungseinrichtung, mit der eine Rotation des zweiten Lagerteils um die Rotordrehachse umkehrbar, verhinderbar oder verhindert ist,
- eine Bewegungsermittlungseinrichtung, eingerichtet zur Ermittlung einer Bewegung des zweiten Lagerteils in zumindest einem Rotationsfreiheitsgrad, der von der Rotation um die Rotordrehachse verschieden ist, und/oder zumindest einem Translationsfreiheitsgrad.

Eine fehlerhafte Bewegung des Rotors der Drehvorrichtung überträgt sich auf das erste Lagerteil und von dort aus beispielsweise über Lagermittel des Drehlagers, beispielsweise Wälzkörper, auf das zweite Lagerteil , sodass Bewegungsfehler an dem zweiten Lagerteil erfasst werden können. Ausgenommen hiervon ist der zuvor definierte Drehpositionsfehler (rotatorischer Bewegungsfehler um eine kartesische Koordinatenachse, die parallel oder fluchtend mit der Rotordrehachse ist), da die Drehbewegung des Rotors aufgrund der Drehbegrenzungseinrichtung nicht auf das zweite Lagerteil übertragen wird.

Das Drehlager ist insbesondere ein Hochpräzisionsdrehlager. Das Drehlager ist beispielsweise ein Luftlager. Es kann ein Lager eingesetzt werden, dass einen Bewegungsfehler (Error Motion), insbesondere einen Abrollfehler, von ≤ 100 nm aufweist. Das Drehlager ist so angeordnet, dass das erste Lagerteil und das zweite Lagerteil relativ zueinander um die Rotordrehachse drehbar sind. Vorzugsweise weist das Drehlager nur einen Rotationsfreiheitsgrad auf.

Das erste Lagerteil ist derart an den Rotor gekoppelt, dass es relativ zu dem Rotor unbeweglich ist, was mit dem Begriff "bewegungsfest an den Rotor gekoppelt" oder "relativ zu dem Rotor bewegungsfest an den Rotor gekoppelt" ausgedrückt wird. Das erste Lagerteil ist somit auch nur zusammen mit dem Rotor, in gleichlaufender Bewegung, um die Rotordrehachse drehbar. Anders ausgedrückt ist das erste Lagerteil nicht allein, also unabhängig von dem Rotor um die Rotordrehachse drehbar.

Vorzugsweise ist die Kopplung zwischen erstem Lagerteil und Rotor derart, dass keine Bewegung des ersten Lagerteils relativ zu dem Rotor ermöglicht ist. Das zweite Lagerteil ist relativ zu dem Rotor der Drehvorrichtung drehbar, weil es auch relativ zu dem bewegungsfest an den Rotor gekoppelten ersten Lagerteil drehbar ist.

Das erste Lagerteil des Drehlagers ist vorzugsweise ein inneres Lagerteil und das zweite Lagerteil ist vorzugsweise ein äußeres Lagerteil. Ein inneres Lagerteil ist näher an der Drehachse des Drehlagers angeordnet als ein äußeres Lagerteil. Beispielsweise ist das erste Lagerteil ein innerer Ring oder ein Kern eines Wälzlagers und das zweite Lagerteil ist ein äußerer Ring eines Wälzlagers.

Das erste Lagerteil und das zweite Lagerteil sind um eine Rotationsachse des Drehlagers relativ zueinander drehbar. Das Drehlager ist relativ zu der Drehvorrichtung vorzugsweise so angeordnet, dass die Rotordrehachse und die Rotationsachse des Drehlagers fluchtend sind. Somit ist das zweite Lagerteil vorzugsweise um die Rotordrehachse relativ zu dem Rotor der Drehvorrichtung drehbar, wobei die Rotordrehachse eine virtuelle bzw. räumliche Achse ist.

Das erste Lagerteil kann direkt an dem Rotor befestigt oder mit dem Rotor verbunden sein, sodass das erste Lagerteil den Rotor berührt, oder es kann indirekt an dem Rotor befestigt oder mit dem Rotor verbunden sein, sodass es den Rotor nicht direkt berührt, beispielsweise unter Verwendung von Kopplungselementen, Zwischenstücken oder Ähnlichem. Eine Kopplung des ersten Lagerteils an dem Rotor, insbesondere eine direkte oder indirekte Verbindung zwischen erstem Lagerteil und Rotor, kann über ein oder mehrere formschlüssige und/oder kraftschlüssige Verbindungsmittel erfolgen. Entsprechend können ein oder mehrere formschlüssige und/oder kraftschlüssige Verbindungen gebildet sein, um das erste Lagerteil an den Rotor zu koppeln.

Die Drehbegrenzungseinrichtung dient dazu, eine Rotation des zweiten Lagerteils zu verhindern, wenn der Rotor und das mit dem Rotor drehfest gekoppelte erste Lagerteil gedreht werden. Vom Standpunkt eines ortsfesten Beobachters oder betrachtet in einem ortsfesten Koordinatensystem, wie einem Statorkoordinatensystem, können also der Rotor und das erste Lagerteil gemeinsam drehen, während mittels der Drehbegrenzungseinrichtung eine Rotation des zweiten Lagerteils um die Rotordrehachse verhindert wird. Das zweite Lagerteil steht also still, während das erste Lagerteil relativ zu dem zweiten Lagerteil um die Drehachse des Drehlagers dreht. Die Drehbegrenzungseinrichtung kann in diesem Sinne auch als Drehverhinderungseinrichtung bezeichnet werden. Eine Drehbegrenzung bedeutet insbesondere eine Drehbegrenzung auf Null oder eine Verhinderung einer Drehung, insbesondere von Anfang an. Eine Drehung des zweiten Lagerteils muss nicht von Beginn einer Bewegung des Rotors um die Rotordrehachse und damit des ersten Lagerteils verhindert sein. Es ist in bestimmten Ausführungsformen möglich, dass der zweite Lagerteil eine Drehbewegung solange vollführt, bis durch die Drehbegrenzungseinrichtung eine weitere Drehung des zweiten Lagerteils verhindert wird. Dieser Umstand wird durch den Begriff "verhinderbar" ausgedrückt.

Die Drehbegrenzungseinrichtung verhindert nicht, oder ermöglicht, eine Bewegung des zweiten Lagerteils in zumindest einem anderen Freiheitsgrad, nämlich zumindest einem anderen Rotationsfreiheitsgrad, verschieden von der Drehung um die Rotordrehachse, und/oder zumindest einem Translationsfreiheitsgrad. Der zumindest eine andere Rotationsfreiheitsgrad ist eine Rotation um eine andere Raumachse als die Rotation des zweiten Lagerteils um die Rotordrehachse. Insbesondere handelt es sich um eine Rotation um eine oder mehrere senkrecht zu der Rotordrehachse stehenden Raumachsen.

Die Bewegung des zweiten Lagerteils in zumindest einem anderen Rotationsfreiheitsgrad und/oder zumindest einem Translationsfreiheitsgrad bildet einen eingangs genannten Bewegungsfehler der Drehvorrichtung, insbesondere des Rotors, ab. Ein rotatorischer Bewegungsfehler der Drehvorrichtung wird durch die Bewegung des zweiten Lagerteils in einem ermöglichten Rotationsfreiheitsgrad abgebildet. Ein translatorischer Bewegungsfehler der Drehvorrichtung wird durch eine ermöglichte Bewegung des zweiten Lagerteils in einem Translationsfreiheitsgrad abgebildet. Legt man beispielsweise ein kartesisches Koordinatensystem zugrunde und ist die Rotordrehachse in Z-Richtung des Koordinatensystems ausgerichtet, dann ist bei der zuvor beschriebenen Anordnung eine oder mehrere der folgenden Bewegungen des zweiten Lagerteils ermöglicht:
- Rotation um die X-Achse, wodurch der Bewegungsfehler Rx abgebildet wird,
- Rotation um die Y-Achse, wodurch der Bewegungsfehler Ry abgebildet wird,
- Translation in Richtung X, wodurch der Bewegungsfehler Tx abgebildet wird,
- Translation in Richtung Y, wodurch der Bewegungsfehler Ty abgebildet wird, und/oder
- Translation in Richtung Z, wodurch der Bewegungsfehler Tz abgebildet wird.

Die Bezeichnungen Tx, Ty, Tz und Rx, Ry, Rz werden in dieser Erfindung auch verwendet für die Beschreibung der entsprechenden Freiheitsgrade, können also sowohl einen Bewegungsfehler bezeichnen, als auch den Freiheitsgrad, in dem dieser Bewegungsfehler auftritt. Bei anderer Lage eines Koordinatensystems oder anderer Definition eines Koordinatensystems ergeben sich logischerweise andere Lagen bzw. Lagebezeichnungen der Freiheitsgrade.

Vorzugsweise ist das zweite Lagerteil um alle translatorischen und rotatorischen Freiheitsgrade beweglich, mit Ausnahme des gesperrten Freiheitsgrads der Rotation um die Rotordrehachse.

Mögliche Relativbewegungen von erstem Lagerteil zu zweitem Lagerteil, die unterschiedlich sind zu der ermöglichten Rotation relativ zueinander um die vorgesehene Drehachse des Lagers, verursachen Fehler bei einer erfindungsgemäßen Anordnung und einem nachfolgend noch beschriebenen erfindungsgemäßen Verfahren zur Ermittlung eines Bewegungsfehlers einer Drehvorrichtung. Relativbewegungen des ersten Lagerteils und zweiten Lagerteils außerhalb des vorgesehenen Rotationsfreiheitsgrads des Drehlagers können fälschlicherweise als Bewegungsfehler der Drehvorrichtung angenommen werden, während sie in der Realität Bewegungsfehler des Lagers sind. Es hat sich allerdings gezeigt, dass solche Bewegungsfehler des Drehlagers deutlich geringer sind als die zu ermittelnden Bewegungsfehler der Drehvorrichtung, insbesondere wenn ein Hochpräzisionsdrehlager verwendet wird. Ferner ist es möglich, Bewegungsfehler des Drehlagers zu ermitteln, beispielsweise mit einer Einrichtung zur Ermittlung eines Drehlager-Bewegungsfehlers, die nachfolgend beschrieben ist. Ermittelte Bewegungsfehler des Drehlagers können bei einer erfindungsgemäßen Anordnung und einem erfindungsgemäßen Verfahren zur Ermittlung eines Bewegungsfehlers einer Drehvorrichtung berücksichtigt werden. Beispielsweise können Bewegungsfehler des Drehlagers rechnerisch berücksichtigt werden. Ein scheinbarer ermittelter Bewegungsfehler der Drehvorrichtung kann zum Beispiel rechnerisch um den Bewegungsfehler des Drehlagers korrigiert werden, um den tatsächlichen Bewegungsfehler der Drehvorrichtung zu ermitteln.

Die erfindungsgemäße Anordnung kann eine Markierung zur Erfassung und/oder zur reproduzierbaren Ausrichtung des Drehlagers aufweisen. Es kann mit der Markierung die Einbaulage des Drehlagers ermittelt werden und bei (Neu)aufbau der Anordnung in immer gleicher Ausrichtung angeordnet und befestigt werden. Lagerteile sind vorzugsweise rotationssymmetrisch und es kann mit einer Markierung die genaue Einbaulage ermittelt werden. Vorteilhaft ist die Markierung so ausgestaltet, dass eine Einbaulage des ersten Lagerteils ermittelt werden kann. Die Markierung ist insbesondere an dem ersten Lagerteil vorgesehen. Es kann eine Markierung zusätzlich so ausgestaltet oder angeordnet sein, dass eine Einbaulage des zweiten Lagerteils ermittelt werden kann. Es können zwei Markierungen vorgesehen sein, wobei mit einer die Einbaulage des ersten Lagerteils ermittelt werden kann und mit der anderen die Einbaulage des zweiten Lagerteils ermittelt werden kann. Reproduzierbare Bewegungsfehler des Drehlagers, die einmalig erfasst wurden, können dann in korrekter Weise berücksichtigt werden, beispielsweise rechnerisch korrigiert werden, wenn die Einbaulage des Drehlagers bekannt ist und/oder reproduzierbar wieder hergestellt werden kann.

Mit der Bewegungsermittlungseinrichtung wird die ermöglichte Bewegung des zweiten Lagerteils, also die Bewegung in einem ermöglichten Translations- und/oder Rotationsfreiheitsgrad, erfasst. Da die Bewegung des zweiten Lagerteils einen Bewegungsfehler der Drehvorrichtung abbildet, kann mit der Bewegungsermittlungseinrichtung ein Bewegungsfehler der Drehvorrichtung erfasst werden.

Die Drehbegrenzungseinrichtung kann aktiv oder passiv ausgestaltet sein.

Mit einer aktiven Drehbegrenzungseinrichtung kann eine Drehung des zweiten Lagerteils entweder verhinderbar oder umkehrbar sein. Einer Drehung des zweiten Lagerteils um die Rotordrehachse kann mit der aktiven Drehbegrenzungseinrichtung entgegengewirkt werden, insbesondere durch eine Drehung in die Gegenrichtung, welche durch die Drehbegrenzungseinrichtung bewirkt wird. Die Drehung in Gegenrichtung kann zeitgleich in gleicher Geschwindigkeit erfolgen, sodass insgesamt, keine Drehung des zweiten Lagerteils erfolgt, was einer Verhinderung der Drehung entspricht. Oder es kann nach einer erfolgten Drehung des zweiten Lagerteils um die Rotordrehachse eine Gegendrehung durch die Drehbegrenzungseinrichtung um den gleichen Winkelbetrag erfolgen, sodass eine Drehung umgekehrt wird. In einer aktiven Ausgestaltung der Drehbegrenzungseinrichtung weist die Drehbegrenzungseinrichtung beispielsweise einen Motor auf, der das in die entgegengesetzte Richtung dreht wie der Rotor des Drehtisches.

In einer Ausführungsform der Erfindung weist die Drehbegrenzungseinrichtung auf:
- ein erstes Drehbegrenzungselement, das an dem zweiten Lagerteil angeordnet ist,
- ein zweites Drehbegrenzungselement, welches ortsfest zu dem Stator der Drehvorrichtung angeordnet ist,
wobei das erste und das zweite Drehbegrenzungselement derart kontaktierbar sind oder derart in Kontakt sind, dass eine Rotation des zweiten Lagerteils um die Rotordrehachse verhinderbar oder verhindert ist. Diese Drehbegrenzungseinrichtung ist vorzugsweise passiv ausgestaltet.

Beispielsweise können das ortsfest angeordnete Element der Abstandsermittlungseinrichtung und der Stator der Drehvorrichtung auf einem gemeinsamen Untergrund stehen und/oder an einem gemeinsamen Untergrund befestigt sein. Ein solcher Untergrund kann insbesondere die Basis oder der Messtisch eines Koordinatenmessgeräts sein, sofern die Anordnung an oder in einem Koordinatenmessgerät angeordnet werden soll.

Das erste Drehbegrenzungselement und das zweite Drehbegrenzungselement wirken zusammen zur Verhinderung der Rotation des zweiten Lagerteils um die Rotordrehachse.

Die Drehbegrenzungseinrichtung kann als Anschlagseinrichtung ausgebildet sein. In einer Variante können das erwähnte erste Drehbegrenzungselement und das erwähnte zweite Drehbegrenzungselement aneinander anschlagen. Durch den Anschlag wird die Rotation oder weitere Rotation des zweiten Lagerteils um die Rotordrehachse verhindert. Der Anschlag ist somit derart ausgebildet, dass der Rotationsfreiheitsgrad des zweiten Lagerteils um die Rotordrehachse gesperrt ist.

In einer anderen Variante können das erste Drehbegrenzungselement und das zweite Drehbegrenzungselement gelenkig miteinander gekoppelt sein. Beispielsweise kann die Drehbegrenzungseinrichtung ein Gelenk aufweisen, über welches das erste Drehbegrenzungselement und das zweite Drehbegrenzungselement miteinander gekoppelt sind. In einer anderen speziellen Variante ist es möglich, dass das erste Drehbegrenzungselement und das zweite Drehbegrenzungselement ein Gelenk ausbilden. Die gelenkige Kopplung ermöglicht die Bewegung des zweiten Lagerteils in den erwähnten Freiheitsgraden und verhindert die Rotation des zweiten Lagerteils um die Rotordrehachse.

Das erste Drehbegrenzungselement, das an dem zweiten Lagerteil angeordnet ist, kann als Vorsprung oder Ausnehmung ausgebildet sein. Beispiele für einen Vorsprung sind eine hervorspringende Nase oder ein Arm. Ein Vorsprung ist insbesondere bewegungsfest relativ zu dem zweiten Lagerteil mit dem zweiten Lagerteil verbunden oder bewegungsfest an das zweite Lagerteil gekoppelt. Beispiele für Ausnehmungen sind eine Öse, eine Bohrung, ein Loch, eine Einbuchtung oder eine Kerbe.

In analoger Weise kann ein zweites Drehbegrenzungselement als Vorsprung oder als Ausnehmung ausgebildet sein, mit allen beschriebenen Varianten. Es kann das erste Drehbegrenzungselement vorspringend ausgebildet sein, wenn das zweite Drehbegrenzungselement als Ausnehmung ausgebildet ist, und umgekehrt. Es kann ein als Vorsprung ausgebildetes Drehbegrenzungselement in ein als Ausnehmung ausgebildetes Drehbegrenzungselement eingreifen, sodass beide Drehbegrenzungselemente zusammenwirken können. Es können zwei als Vorsprünge ausgebildete Drehbegrenzungselemente kontaktierbar sein oder in Kontakt sein.

In einer Ausführungsform der Erfindung weist die Bewegungsermittlungseinrichtung folgende Elemente auf:
- einen Messkörper,
- zumindest eine Messeinrichtung, die zur Messung einer Messgröße, welche einer relative Bewegung zwischen Messkörper und Messeinrichtung ausdrückt, direkt oder indirekt auf den Messkörper gerichtet ist,
wobei entweder der Messkörper oder die zumindest eine Messeinrichtung ortsfest zu dem Stator der Drehvorrichtung angeordnet ist und das andere Element der Bewegungsermittlungseinrichtung an das zweite Lagerteil des Drehlagers gekoppelt ist.

Insbesondere ist entweder der Messkörper oder die zumindest eine Messeinrichtung bewegungsfest zu dem Stator der Drehvorrichtung angeordnet, also relativ zu dem Stator unbeweglich. Das andere Element der Bewegungsermittlungseinrichtung ist insbesondere bewegungsfest an das zweite Lagerteil des Drehlagers gekoppelt, was bedeutet, dass es unbeweglich relativ zu dem zweiten Lagerteil ist.

Entweder ist der Messkörper oder die zumindest eine Messeinrichtung ortsfest in einem feststehenden Koordinatensystem, das auch als Statorkoordinatensystem bezeichnet wird. Insbesondere ist entweder der Messkörper oder die zumindest eine Messeinrichtung ortsfest neben dem Rotor der Drehvorrichtung angeordnet. Der Rotor der Drehvorrichtung kann an dem ortsfest angeordneten Messkörper oder der ortsfest angeordneten Messeinrichtung vorbeidrehen.

Gemäß beschriebener Ausführungsform können also folgende Elemente wie folgt angeordnet sein:
- Messkörper ortsfest, insbesondere bewegungsfest, zu dem Stator der Drehvorrichtung und Messeinrichtung an dem zweiten Lagerteil des Drehlagers gekoppelt, oder
- Messeinrichtung ortsfest, insbesondere bewegungsfest, zu dem Stator der Drehvorrichtung und Messkörper an das zweite Lagerteil des Drehlagers gekoppelt.

Wie oben erwähnt, kann bei einer Drehung des Rotors und des ersten Lagerteils eine Rotation des zweiten Lagerteils um die Rotordrehachse mit der Drehbegrenzungseinrichtung verhindert werden. Bezüglich des Rotationsfreiheitsgrades um die Rotordrehachse bleibt somit das zweite Lagerteil stationär bzw. wird stationär gehalten. Auch ein mit dem zweiten Lagerteil gekoppeltes Element der Bewegungsermittlungseinrichtung, wie zum Beispiel ein Messkörper oder eine Messeinrichtung, rotiert also durch Einwirkung der Drehbegrenzungseinrichtung nicht um die Rotordrehachse. Dies hat zur Folge, dass das ortsfest zu dem Stator der Drehvorrichtung angeordnete Element der Bewegungsermittlungseinrichtung und das an dem zweiten Lagerteil des Drehlagers angeordnete weitere Element der Bewegungsermittlungseinrichtung nicht relativ zueinander um die Rotordrehachse drehen. Anders ausgedrückt bleiben die beiden Elemente der Bewegungsermittlungseinrichtung zueinander stationär bezüglich des Rotationsfreiheitsgrads um die Rotordrehachse. Relativbewegungen in anderen Freiheitsgraden sind möglich und zur Ermittlung eines Bewegungsfehlers der Drehvorrichtung erforderlich und erwünscht.

Messkörper und Messeinrichtung wirken zusammen zur Messung einer Messgröße, durch welche eine relative Bewegung zwischen Messkörper und Messeinrichtung ausgedrückt wird. Eine relative Bewegung zwischen Messkörper und Messeinrichtung kann durch die Messgröße direkt oder indirekt ausgedrückt sein oder aus der Messgröße herleitbar sein. Insbesondere ist die Messgröße ein Abstand oder eine Abstandsänderung, vorzugsweise zwischen Messkörper und Messeinrichtung, oder ein Winkel oder eine Winkeländerung, insbesondere ein Winkel oder eine Winkeländerung, die zwischen Messkörper und Messeinrichtung feststellbar ist.

Eine Messeinrichtung ist beispielsweise ein Abstandssensor, ein Winkelsensor, ein Autokollimator, ein Interferometer, eine Kamera, oder eine beliebige Kombination aus zwei oder mehreren davon. Beispielhafte Abstandssensoren sind kapazitive Sensoren, induktive Sensoren, Wirbelstromsensoren.

Ein Messkörper weist in einer Ausführungsform der Erfindung eine plane Fläche auf, auf welche die Messeinrichtung gerichtet ist. Diese Lösung ist im Vergleich zu empfindlichen und hochpräzisen Kugeln kostengünstiger und zudem kann aufgrund der Flächenausdehnung der planen Oberfläche eine einfachere Ausrichtung der Messeinrichtung auf den Messkörper erfolgen.

In einer Ausführungsform der Erfindung weist der Messkörper eine reflektierende Fläche auf, insbesondere eine plane reflektierende Fläche. Die Fläche ist vorzugsweise reflektierend für elektromagnetische Wellen, insbesondere Licht. Beispielsweise kann der Messkörper einen Spiegel, insbesondere einen Planspiegel, aufweisen. Ein Messkörper mit reflektierender Fläche kann vorteilhaft mit einem oder mehreren Abstandssensoren oder einem Autokollimator, als Messeinrichtung, zusammenwirken. Ein Messkörper mit reflektierender Oberfläche, insbesondere reflektierender planer Oberfläche, wird vorzugsweise an das zweite Lagerteil des Drehlagers gekoppelt.

In einer Ausführungsform der Erfindung weist die Bewegungsermittlungseinrichtung zumindest einen Taster auf, der das zweite Lagerteil berührt. In dieser Ausführungsform kann durch eine Tasterbewegung eine Bewegung des zweiten Lagerteils festgestellt werden. Ein beispielhafter Taster ist ein Induktivtaster. Besonders vorteilhaft können mit einem oder mehreren Tastern Translationsbewegungen des zweiten Lagerteils festgestellt werden.

In einer Ausführungsform der Erfindung weist die Anordnung eine Einrichtung zur Ermittlung eines Bewegungsfehlers des Drehlagers auf, welche aufweist:
- einen Messkörper, der an dem ersten Lagerteil bewegungsfest zu dem ersten Lagerteil angebracht ist,
- zumindest eine Messeinrichtung, die zur Messung einer Messgröße, welche eine relative Bewegung zwischen Messkörper und Messeinrichtung ausdrückt, direkt oder indirekt auf den Messkörper gerichtet ist, der an dem ersten Lagerteil angebracht ist.

Die zumindest eine Messeinrichtung ist insbesondere bewegungsfest an das zweite Lagerteil des Drehlagers gekoppelt, was bedeutet, dass es unbeweglich relativ zu dem zweiten Lagerteil ist.

Der Messkörper, der an dem ersten Lagerteil angebracht ist, ist von einem vorangehend beschriebenen Messkörper einer Bewegungsermittlungseinrichtung zu unterscheiden. Insofern kann der Messkörper, der an dem ersten Lagerteil angebracht ist, auch als zweiter Messkörper bezeichnet werden und ein Messkörper einer Bewegungsermittlungseinrichtung als erster Messkörper bezeichnet werden.

In analoger Weise ist eine Messeinrichtung, die Teil einer Einrichtung zur Ermittlung eines Bewegungsfehlers des Drehlagers ist, zu unterscheiden von einer Messeinrichtung, die Teil der vorangehend beschriebenen Bewegungsermittlungseinrichtung ist. In diesem Sinne kann die Messeinrichtung eine Einrichtung zur Ermittlung eines Bewegungsfehlers des Drehlagers als zweite Messeinrichtung bezeichnet werden und die Messeinrichtung, die Teil der vorangehend beschriebenen Bewegungsermittlungseinrichtung ist, als erste Messeinrichtung.

Für den zweiten Messkörper und die zweite Messeinrichtung gilt die analoge Offenbarung wie für einen ersten Messkörper und eine erste Messeinrichtung, die oben anhand einer Bewegungsermittlungseinrichtung beschrieben wurden. Ebenfalls kann die Messgröße vorzugsweise ein Abstand, eine Abstandsänderung, ein Winkel oder eine Winkeländerung sein. Der zweite Messkörper ist vorzugsweise ein rotationssymmetrischer Messkörper. Eine oder mehrere zweite Messeinrichtungen können an verschiedenen Positionen entlang der Rotationsachse eines rotationssymmetrischen Messkörpers auf den Messkörper gerichtet sein, insbesondere mehrere Abstandssensoren. Ein rotationssymmetrischer zweiter Messkörper ist insbesondere ein Zylinder oder weist mehrere miteinander verbundene Kugeln auf, wobei ein spezielles Beispiel eine Doppelkugel ist.

In einem weiteren Aspekt betrifft die vorliegende Erfindung ein Verfahren zur Ermittlung eines Bewegungsfehlers einer Drehvorrichtung, bei dem eine Anordnung eingesetzt wird, aufweisend:
- eine Drehvorrichtung, deren Bewegungsfehler ermittelt werden soll, aufweisend einen Rotor, der um eine Rotordrehachse drehbar ist, und einen Stator
- ein Drehlager, aufweisend ein erstes Lagerteil und ein zweites Lagerteil, die relativ zueinander drehbar sind, wobei das erste Lagerteil bewegungsfest an den Rotor der Drehvorrichtung gekoppelt ist und das zweite Lagerteil relativ zu dem Rotor der Drehvorrichtung drehbar ist,
- eine Drehbegrenzungseinrichtung,
- eine Bewegungsermittlungseinrichtung,
und wobei das Verfahren die folgenden Schritte aufweist:
- Drehen des Rotors der Drehvorrichtung um die Rotordrehachse in eine Drehrichtung, sodass eine Drehbewegung des ersten Lagerteils gemeinsam mit dem Rotor erfolgt, wobei mit der Drehbegrenzungseinrichtung eine Rotation des zweiten Lagerteils um die Rotordrehachse verhindert wird,
- Ermitteln einer Bewegung des zweiten Lagerteils, die verschieden ist von einer Rotation um die Rotordrehachse, mit der Bewegungsermittlungseinrichtung,
- Ermitteln oder Erhalten eines Bewegungsfehlers der Drehvorrichtung aus der ermittelten Bewegung des zweiten Lagerteils.

Die ermittelte Bewegung des zweiten Lagerteils ist insbesondere ausgewählt aus Folgendem:
- zumindest eine Rotation um eine Rotationsachse, die unterschiedlich ist zur Rotordrehachse,
- zumindest eine Translation.

Insbesondere betrifft die Bewegung des zweiten Lagerteils eine Bewegung, die gemäß der oben beschriebenen Anordnung ermöglicht ist und vorangehend bereits detailliert beschrieben wurde.

Wie oben bereits beschrieben, bildet die Bewegung des zweiten Lagerteils, die verfahrensgemäß ermittelt wird, einen Bewegungsfehler der Drehvorrichtung, insbesondere des Rotors der Drehvorrichtung, ab. Daher wird in dem Verfahren der Bewegungsfehler der Drehvorrichtung aus der Bewegung des zweiten Lagerteils ermittelt.

In dem erfindungsgemäßen Verfahren und nachfolgend beschriebenen speziellen Ausführungsformen davon können alle gegenständlichen Merkmale und auch Verfahrensmerkmale, einzeln oder in beliebiger Kombination, zur Anwendung kommen, die bereits zuvor in dieser Beschreibung beschrieben wurden. Eine spezielle Verfahrensgestaltung ist nachfolgend noch genannt:

Es kann in dem Verfahren eine Anordnung mit einer Bewegungsermittlungseinrichtung eingesetzt werden, die einen Messkörper und eine Messeinrichtung aufweist, wie vorangehend beschrieben, wobei entweder der Messkörper oder die zumindest eine Messeinrichtung ortsfest zu dem Stator der Drehvorrichtung angeordnet ist und das andere Element der Bewegungsermittlungseinrichtung in das zweite Lagerteil des Drehlagers gekoppelt ist. In dieser Verfahrensvariante erfolgt das Messen einer Messgröße, die eine relative Bewegung zwischen Messkörper und Messeinrichtung ausdrückt, in verschiedenen Drehpositionen des Rotors. Aus der Messgröße kann die relative Bewegung zwischen Messkörper und Messeinrichtung ermittelt werden. Es kann aus der relativen Bewegung zwischen Messkörper und Messeinrichtung die Bewegung des zweiten Lagerteils ermittelt werden.

In einem weiteren Aspekt betrifft die Erfindung ein Koordinatenmessgerät (KMG), aufweisend
- eine Drehvorrichtung (2), deren Bewegungsfehler ermittelt werden soll, aufweisend einen Rotor (4), der um eine Rotordrehachse (DR) drehbar ist, und einen Stator (3),
- ein Drehlager (5), aufweisend ein erstes Lagerteil (6) und ein zweites Lagerteil (7), die relativ zueinander drehbar sind, wobei das erste Lagerteil bewegungsfest an den Rotor (4) der Drehvorrichtung (2) gekoppelt ist und das zweite Lagerteil (7) relativ zu dem Rotor (4) der Drehvorrichtung drehbar ist,
- eine Drehbegrenzungseinrichtung (11, 40), mit der eine Rotation des zweiten Lagerteils (7) um die Rotordrehachse (RD) umkehrbar, verhinderbar oder verhindert ist.

Hierzu wird auf die vorangehende Offenbarung zu den genannten Gegenständen, die Teil des Koordinatenmessgeräts sind, Bezug genommen. Insbesondere ist die Drehvorrichtung auf einer Basis eines KMG angeordnet. Die Drehvorrichtung ist insbesondere ein Drehtisch zur Vermessung von Werkstücken. Das KMG ist insbesondere ein KMG mit taktilem Messsystem, anders ausgedrückt einem tastenden Messsystem.

Es kann das Koordinatenmessgerät weiterhin einen Teil einer Bewegungsermittlungseinrichtung aufweisen oder eine vollständige Bewegungsermittlungseinrichtung. Hierzu wird auf die vorangehende Offenbarung zu einer Bewegungsermittlungseinrichtung Bezug genommen.

Die Bewegungsermittlungseinrichtung kann, wie vorangehend beschrieben, einen Messkörper und zumindest eine Messeinrichtung aufweisen. Wenn das KMG nur einen Teil einer Bewegungsermittlungseinrichtung aufweist, also nur ein solcher Teil in oder an dem KMG angeordnet ist, dann kann die Anordnung der Teile wie folgt sein: Es kann die Drehvorrichtung in oder an dem KMG angeordnet sein, insbesondere auf einer Basis oder einem Messtisch. Es kann entweder der Messkörper oder die zumindest eine Messeinrichtung außerhalb des KMG und ortsfest zu dem Stator der Drehvorrichtung angeordnet sein, beispielsweise neben dem KMG, insbesondere neben einer Basis oder einem Messtisch. Es kann das andere Element der Bewegungsermittlungseinrichtung an das zweite Lagerteil des Drehlagers gekoppelt sein.

Das erfindungsgemäße KMG kann eine Anordnung zur Ermittlung eines Bewegungsfehlers einer Drehvorrichtung aufweisen, wie vorangehend beschrieben. Es kann jede der zuvor beschriebenen Anordnungen in dem KMG vorhanden sein. Das Koordinatenmessgerät kann zur Durchführung jedes der beschriebenen Verfahren eingerichtet sein. Insbesondere kann das KMG einen Speicher aufweisen, in dem Bewegungsfehler einer Drehvorrichtung gespeichert sind.

Mit einem erfindungsgemäßen KMG kann der Bewegungsfehler einer Drehvorrichtung ermittelt werden, die innerhalb des KMG angerordnet ist, insbesondere innerhalb des Messbereichs des KMG. Ein solches KMG kann zur Echtzeit-Korrektur von Messdaten der Vermessung eines Werkstücks verwendet werden, welches zur oder bei der Vermessung mit der Drehvorrichtung gedreht wird. Ein Verfahren dazu ist nachfolgend noch angegeben.

In noch einem weiteren Aspekt betrifft die Erfindung ein Verfahren zur Vermessung eines Werkstücks mit einem Koordinatenmessgerät, wobei ein Koordinatenmessgerät (KMG) eingesetzt wird, aufweisend eine vorangehend beschriebene Anordnung zur Ermittlung eines Bewegungsfehlers einer Drehvorrichtung. Es kann jede der zuvor beschriebenen Anordnungen in dem KMG vorhanden sein. Das Verfahren weist die folgenden Schritte auf:
- Anordnen eines Werkstücks auf der Drehvorrichtung,
- Drehen des Rotors der Drehvorrichtung um die Rotordrehachse in eine Drehrichtung, sodass eine Drehung des Werkstücks erfolgt und eine Drehbewegung des ersten Lagerteils gemeinsam mit dem Rotor erfolgt, wobei mit der Drehbegrenzungseinrichtung eine Rotation des zweiten Lagerteils um die Rotordrehachse verhindert wird,
- Ermitteln einer Bewegung des zweiten Lagerteils, die verschieden ist von einer Rotation um die Rotordrehachse, mit der Bewegungsermittlungseinrichtung,
- Ermitteln oder Erhalten eines Bewegungsfehlers der Drehvorrichtung aus der ermittelten Bewegung des zweiten Lagerteils,
- Vermessen des Werkstücks mit einem Messsystem des Koordinatenmessgeräts,
- Auswerten, Überwachen und/oder Korrigieren zumindest eines Messwerts, der aus dem Vermessen des Werkstücks erhalten wird, unter Verwendung des ermittelten oder erhaltenen Bewegungsfehlers der Drehvorrichtung.

Das Verfahren kann, in spezielleren Ausführungsformen, jede verfahrensmäßige Maßnahmen aufweisen, die anhand einer zuvor erwähnten Anordnung beschrieben wurde.

Das Anordnen eines Werkstücks auf der Drehvorrichtung erfolgt so, dass es zusammen mit dem Rotor drehbar ist. Das Werkstück kann auf/an dem Rotor oder auf einem Drehteller angeordnet sein, der mit dem Rotor verbunden oder an den Rotor gekoppelt ist. Insbesondere ist das Werkstück auf/an dem ersten Lagerteil angeordnet, was direkt oder indirekt erfolgen kann, und relativ zu dem ersten Lagerteil drehfest.

Mit dem Verfahren erfolgt zum einen das Ermitteln oder Erhalten eines Bewegungsfehlers der Drehvorrichtung und zum anderen die Auswertung und/oder Korrektur von Messwerten aus der Vermessung eines Werkstücks mit dem KMG unter Verwendung des Bewegungsfehlers bzw. von Bewegungsfehlerwerten. Bewegungsfehler der Drehvorrichtung verfälschen ein Messergebnis aus der Vermessung eines Werkstücks, das mit der Drehvorrichtung bei der Vermessung gedreht wird. Mit dem Verfahren können somit eine Echtzeitermittlung der Bewegungsfehler und auch eine Echtzeit-Korrektur der Messwerte aus der Vermessung des Werkstücks erfolgen. Eine Korrektur von Messwerten aus der Vermessung des Werkstücks erfolgt vorzugsweise rechnerisch.

Vorteil des Verfahrens ist, dass eine Drehvorrichtung verwendet werden kann, die relativ große Bewegungsfehler aufweist. Es kann beispielsweise ein günstiger, insbesondere wälzgelagerter Drehtisch verwendet werden. Das Drehlager weist vorzugsweise minimale Bewegungsfehler auf. Eventuell vorhandene Bewegungsfehler des Drehlagers sind vorzugsweise reproduzierbar. Dies hat den Vorteil, dass Bewegungsfehler des Drehlagers getrennt erfasst und rechnerisch korrigiert werden können.

Wie bereits erwähnt, kann in dem Verfahren jegliche erfindungsgemäße Anordnung verwendet werden. In einer möglichen speziellen Ausgestaltung wird ein Verfahren angegeben, wobei
- das Messsystem des Koordinatenmessgeräts ein taktiles Messsystem ist
- die Bewegungsermittlungseinrichtung folgende Elemente aufweist:
   - einen Messkörper,
   - zumindest eine Messeinrichtung, die direkt oder indirekt in einer Messrichtung auf den auf den Messkörper gerichtet ist,
      wobei entweder der Messkörper oder die zumindest eine ortsfest zu dem Stator der Drehvorrichtung angeordnet ist und das andere Element der Bewegungsermittlungseinrichtung an das zweite Lagerteil des Drehlagers gekoppelt ist,
und wobei bei dem Verfahren
- das Ermitteln der Bewegung des zweiten Lagerteils aufweist:
   Messen der Messgröße, welche die relative Bewegung von Messkörper und Messeinrichtung ausdrückt, in der Messrichtung,
- das Vermessen des Werkstücks derart erfolgt, dass das Werkstück mit dem taktilen Messsystem des Koordinatenmessgeräts in einer Antastrichtung angetastet wird, die der Messrichtung entspricht oder im Wesentlichen entspricht.

In dieser Variante wird der Bewegungsfehler in gleicher Richtung gemessen wie die Antastrichtung, wodurch eine besonders genaue effektive Korrektur von Messwerten aus der Vermessung des Werkstücks möglich ist. Der erwähnte Messkörper weist insbesondere eine plane Fläche auf, auf welche die Messeinrichtung gerichtet ist, vorzugsweise einen Planspiegel. Die zumindest eine Messeinrichtung ist vorzugsweise ausgewählt aus einem Abstandssensor oder einem Autokollimator oder einer Kombination davon.

Nachfolgend wird die Erfindung anhand von Ausführungsbeispielen beschrieben. Es zeigen:
- Fig. 1: ein erstes Ausführungsbeispiel einer erfindungsgemäßen Anordnung in seitlicher Ansicht,
- Fig. 2: eine Erweiterung des ersten Ausführungsbeispiels an einer Sicht von oben,
- Fig. 3: eine Ansicht einer zum ersten Ausführungsbeispiel alternativen Drehbegrenzungseinrichtung von oben,
- Fig. 4: ein zweites Ausführungsbeispiel einer erfindungsgemäßen Anordnung,
- Fig. 5: ein drittes Ausführungsbeispiel einer erfindungsgemäßen Anordnung,
- Fig. 6: ein viertes Ausführungsbeispiel einer erfindungsgemäßen Anordnung,
- Fig. 7: eine Anordnung zur Messung eines translatorischen Bewegungsfehlers in Richtung der Rotordrehachse und
- Fig. 8: erfindungsgemäße Verfahrensabläufe,
- Fig. 9: ein Koordinatenmessgerät mit einer erfindungsgemäßen Anordnung

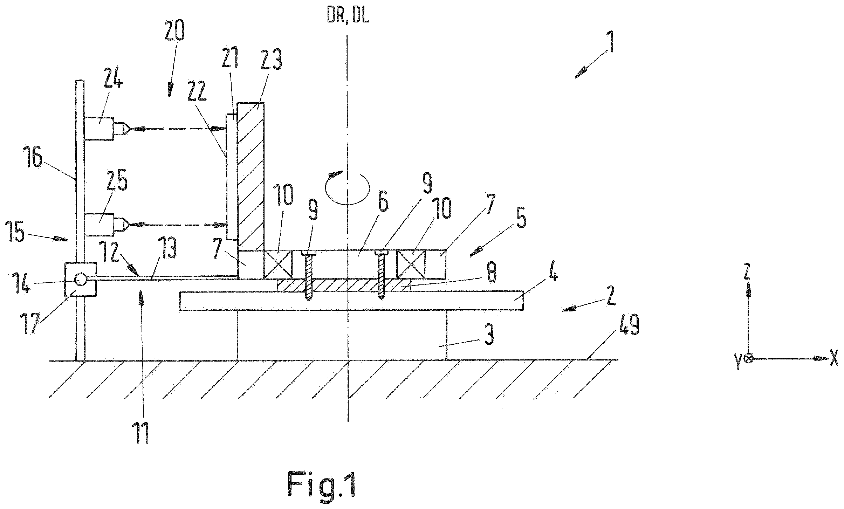

Die Anordnung 1 aus Fig. 1 weist eine Drehvorrichtung 2, in diesem Beispiel einen Drehtisch, auf, dessen Stator 3 auf dem Untergrund 49 steht. Über dem Stator 3 ist der Rotor 4 angeordnet, der um die Rotordrehachse DR drehbar ist. Fig. 1 zeigt einen Querschnitt durch die Drehvorrichtung 2 sowie ein aufgebrachtes Drehlager 5 in seitlicher Ansicht. Kopplungsmittel zwischen Stator 3 und Rotor 4 sind nicht gezeigt.

Auf dem Rotor 4 ist eine Distanzplatte 8 angeordnet. Auf der Distanzplatte 8 ist ein erstes, inneres Lagerteil 6 des Drehlagers 5 aufliegend. Das erste Lagerteil 6 ist mittels Schrauben 9, welche die Distanzplatte 8 durchdringen, an den Rotor 4 angeschraubt. Dadurch vollzieht das erste Lagerteil 6 eine Drehbewegung des Rotors 4, die durch einen Pfeil um die Drehachse DR angedeutet ist, mit.

Das erste Lagerteil 6 und das zweite Lagerteil 7 sind um die Lagerdrehachse DL drehbar, deren Lage identisch ist zu der Rotordrehachse DR. Anders ausgedrückt sind die Achsen DR und DL fluchtend.

Über Lagermittel 10 wird eine bewegliche Verbindung zwischen dem ersten Lagerteil 6 und dem äußeren Lagerteil 7 hergestellt. Die Lagermittel 10 sind nur schematisch dargestellt. Beispielsweise können die Lagermittel 10 Wälzkörper, wie Kugeln oder Rollen, sein. Das erste Lagerteil 6 und das zweite Lagerteil 7 können Führungen für Wälzkörper aufweisen, die nicht näher dargestellt sind. Wälzkörper können in einem Wälzkörperkäfig angeordnet sein, der ebenfalls nicht gezeigt ist. In einer anderen Variante kann das Lagermittel 10 das Lagermittel eines Luftlagers sein, aufweisend oder bestehend aus Luft.

Eine Drehbegrenzungseinrichtung 11 ist zweiteilig ausgestaltet. Ein erstes Drehbegrenzungselement 12 weist einen Arm 13 auf, der mit einem Ende an dem zweiten Lagerteil 7 befestigt ist und an dessen anderem Ende eine Kugel 14 angebracht ist. Ein zweites Drehbegrenzungselement 15 weist einen am Untergrund 49 verankerten Stab 16 und die an dem Stab 16 angebrachte Anschlagsplatte 17 auf. Die Kugel 14 schlägt an die Anschlagsplatte 17 an bzw. liegt an der Anschlagsplatte 17 an, sodass eine Drehung des zweiten Lagerteils 7 um die Rotordrehachse verhindert ist. Sofern die Kugel 14 noch nicht zu Beginn einer Drehung des Rotors um die Achse DR an der Anschlagsplatte 17 anschlägt, geschieht dies im Laufe der Drehung, sodass ab Kontaktierung der Kugel 14 mit der Anschlagsplatte 17 eine Drehung des zweiten Lagerteils 7 um die Rotordrehachse DR verhindert ist.

Die Drehung um die Rotordrehachse DR entspricht der hier gewählten Darstellung, gemäß dem rechts abgebildeten kartesischen Koordinatensystem, dem Rotationsfreiheitsgrad R_{Z}, da die Rotordrehachse DR parallel zur Koordinatenachse Z ist bzw. in Richtung der Z-Koordinate weist. Die Drehbegrenzungseinrichtung 11 ermöglicht eine Rotation des zweiten Lagerteils 7 um eine Rotationsachse, die in X-Richtung zeigt, und um eine Rotationsachse, die in Y-Richtung zeigt, ermöglicht also eine Rotation in den Freiheitsgraden R_{Y} und R_{X}. Diese Rotationen sind durch die Kugelform des Anschlagselements 14 besonders gut realisierbar, da zum einen die Kontaktfläche durch die Kugelform sehr gering gehalten wird und dadurch der Rotationsfreiheitsgrad R_{Y} vorteilhaft realisierbar ist und durch die Kugelform auch der Rotationsfreiheitsgrad R_{X} sehr gut realisierbar ist. Ermöglicht sind ferner Translationsbewegungen des zweiten Lagerteils 7 zumindest in X-Richtung und in Z-Richtung (Freiheitsgrade T_{X} und T_{Z}). Bedingt kann auch eine Translation in Richtung Y ermöglicht sein, beispielsweise durch eine entsprechend gewählte Elastizität des Stabes 13.

Bewegungsfehler des Rotors in den Freiheitsgraden R_{X}, R_{Y}, T_{X}, T_{Z} und gegebenenfalls T_{Y} werden von dem Rotor 4 über das innere Lagerteil 6 und die Lagermittel 10 auf das äußere Lagerteil 7 übertragen. Mit der nachfolgend beschriebenen Bewegungsermittlungseinrichtung 20 können einige dieser Bewegungsfehler erfasst werden.

Die Bewegungsermittlungseinrichtung 20 weist den Messkörper 21 auf, der ein Planspiegel ist, dessen Spiegelfläche 22 senkrecht zur Zeichnungsebene der Fig. 1 ausgerichtet ist. Der Messkörper 21 ist über dem Halter 23 an dem äußeren Lagerteil 7 befestigt.

Die Bewegungsermittlungseinrichtung 20 weist als weitere Elemente die Messeinrichtungen 24 und 25 auf, die in diesem Beispiel Abstandssensoren sind. Die Abstandssensoren 24, 25 sind auf den Spiegel 21 bzw. die plane Spiegeloberfläche 22 ausgerichtet und sie senden einen Messstrahl in Richtung des Spiegels, angedeutet durch gestrichelte Doppelpfeile.

Die Abstandssensoren 24, 25 sind an dem Stab 16 befestigt, der am Untergrund 49 verankert ist und an dem auch die Anschlagsplatte 17 befestigt ist. Die Befestigung der Messeinrichtungen 24, 25 an dem Drehbegrenzungselement 15 bzw. dem Halter 16 des Drehbegrenzungselementes ist aber nicht zwingend. Die Abstandssensoren 24, 25 könnten an einem separaten Halter befestigt sein. Entscheidend ist in diesem Ausführungsbeispiel, dass die Abstandssensoren 24, 25 ortsfest relativ zu dem Stator 3 angeordnet sind. Insbesondere sind die Messeinrichtungen 24, 25 nicht um die Drehachse DR rotierbar.

Durch die Drehbegrenzungseinrichtung 11 wird der Messkörper 21 während einer Messung immer in Richtung der Messeinrichtungen 24, 25 ausgerichtet, wenn der Rotor 4 und damit das innere Lagerteil 6 in die Achse DR rotieren.

Mit der in Fig. 1 gezeigten Bewegungsermittlungseinrichtung 20 kann der rotatorische Bewegungsfehler im Freiheitsgrad R_{Y} ermittelt werden. Bei Rotation des Rotors um die Y-Achse, die senkrecht zur Figurenebene der Fig. 1 steht, im Uhrzeigersinn wird der Abstand zwischen dem unteren Abstandssensor 25 und dem Messkörper 21 verkürzt und der Abstand zwischen dem oberen Abstandssensor 24 und dem Messkörper 21 verlängert. Umgekehrt wird bei einer Rotation des Rotors 4 um die Y-Achse der Abstand zwischen dem oberen Abstandssensor 24 und dem Messkörper 21 verkürzt und der Abstand zwischen dem unteren Abstandssensor 25 und dem Messkörper 21 verlängert. Durch Auswertung der in den Abstandssensoren 24, 25 gemessenen Abstände zum Messkörper 21 kann somit der rotatorische Bewegungsfehler im Freiheitsgrad R_{Y} ermittelt werden. Der rotatorische Bewegungsfehler im Freiheitsgrad R_{Y} ist der Rotation des Rotors 4 um die vorgesehene und erwünschte Drehachse DR überlagert.

Weiterhin kann mit der Bewegungsermittlungseinrichtung 20 ein translatorischer Bewegungsfehler des Rotors 4 in X-Richtung, also im Freiheitsgrad T_{X} ermittelt werden. Bei einer Translation des Rotors 4 in X-Richtung nach rechts werden die Abstände zwischen den Sensoren 24, 25 und dem Messkörper 21 in gleicher Weise vergrößert, bei einer Translation in X-Richtung nach links (negative X-Richtung) werden die Abstände gleichmäßig verringert.

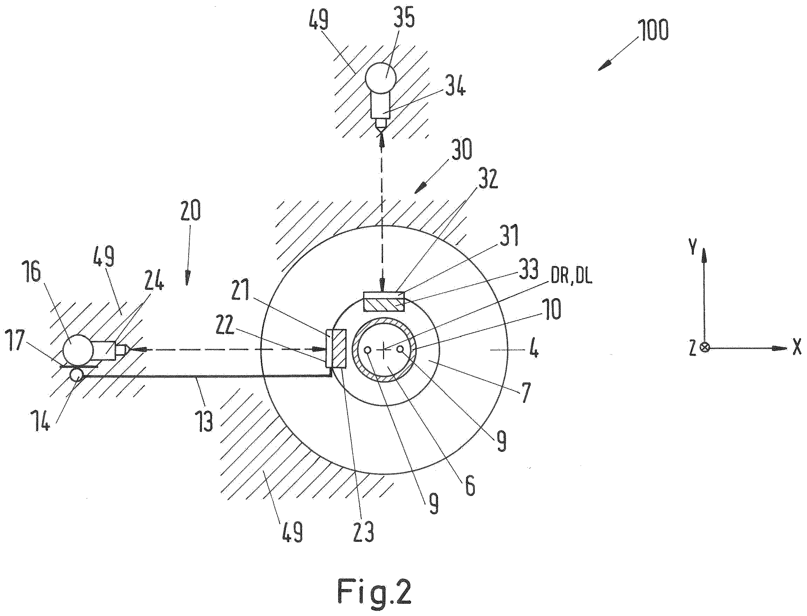

Fig. 2 zeigt eine weitere Bewegungsermittlungseinrichtung 30 zur Ermittlung weiterer Freiheitsgrade. Der Blick fällt entlang der Z-Achse von oben auf die Anordnung 100, die eine Erweiterung der in Fig. 1 gezeigten Anordnung 1 ist. Gleiche Bezugszeichen in Fig. 2 haben die gleiche Bedeutung wie die entsprechenden Bezugszeichen in Fig. 1. Die weitere Bewegungsermittlungseinrichtung 30 weist den Messkörper 31 auf, der über den Halter 33 an dem äußeren Lagerring 7 befestigt ist. Die plane Spiegelfläche 32 weist in Y-Richtung, während die plane Spiegelfläche 22 des Messkörpers 21 in X-Richtung ausgerichtet ist. Auch die Bewegungsermittlungseinrichtung 30 weist zwei Abstandssensoren auf, von denen ein oberer Abstandssensor 34 gezeigt ist. Ein zweiter Abstandssensor, der analog zu dem Sensor 25 aus Fig. 1 unterhalb des Abstandssensors 34 angeordnet ist, wird durch den Abstandssensor 34 verdeckt. Der Abstandssensor 34 und der weitere verdeckte Abstandssensor sind an dem Halter 35 angebracht, der am Untergrund 49 verankert ist. Somit sind die Messeinrichtung 34 und die weitere verdeckte Messeinrichtung der Bewegungsermittlungseinrichtung 30 ortsfest zu dem Stator 3, der ebenfalls in fester Position auf dem Untergrund 49 angeordnet ist und in dieser Ansicht durch den Rotor 4 verdeckt ist.

Mit der Bewegungsermittlungseinrichtung 30 kann der rotatorische Bewegungsfehler des Rotors 4 im Freiheitsgrad R_{X} ermittelt werden und der translatorische Bewegungsfehler im Freiheitsgrad T_{Y}. Die Ermittlung erfolgt in analoger Weise wie die Ermittlung von Bewegungsfehlern mit der Bewegungsermittlungseinrichtung 20.

Alternativ oder zusätzlich zu Abstandssensoren 24, 25, 34 kann auf die Spiegel 21 und/oder 31 jeweils ein Autokollimator gerichtet sein. Mit einem Autokollimator kann eine Verkippung des Spiegels 31 bzw. des Spiegels 21 gemessen werden, sodass ein entsprechender rotatorischer Bewegungsfehler ermittelt werden kann. Mit einem auf den Spiegel 21 gerichteten Autokollimator kann ein rotatorischer Bewegungsfehler im Freiheitsgrad R_{Y} ermittelt werden, mit einem auf den Spiegel 31 gerichteten Autokollimator ein rotatorischer Bewegungsfehler im Freiheitsgrad R_{X}. Ein Autokollimator kann mit einem Abstandssensor kombiniert werden, der auf die gleiche Spiegelfläche ausgerichtet ist. Mit einem Abstandssensor kann dann ein translatorischer Bewegungsfehler in die entsprechende Raumrichtung ermittelt werden.

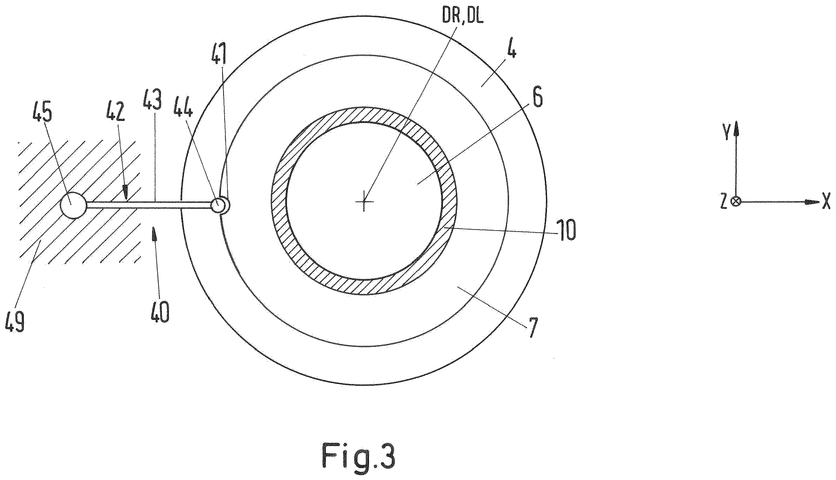

Fig. 3 zeigt eine alternative Ausführungsform einer Drehbegrenzungseinrichtung 40. Gleiche Bezugszeichen wie in vorherigen Zeichnungen bedeuten gleiche Gegenstände wie zuvor erläutert. In dem zweiten Lagerteil 7 ist als erstes Drehbegrenzungselement 40 eine Ausnehmung gebildet, die halbkreisförmig ist. Alternativ könnte die Ausnehmung 41 halbklugelförmig sein. Ein zweites Drehbegrenzungselement 42 weist den Arm 43 auf, an dessen einem Ende eine Kugel 44 angebracht ist, die in die Ausnehmung 41 an dem zweiten Lagerteil 7 eingreift. Mit dem anderen Ende ist der Arm 43 über den Halter 45 fest am Untergrund 49 verankert. Der Arm 42 ist derart mit dem Halter 45 verbunden, dass er nicht translatorisch oder rotatorisch beweglich ist.

Die Ausnehmung 41 des ersten Drehbegrenzungselements und die Kugel 44 des zweiten Drehbegrenzungselements 42 können passgenau aufeinander abgestimmt bzw. komplementär geformt sein. Ein in Fig. 3 gezeigter Spalt muss nicht vorhanden sein. Allerdings wird der Kontakt reibungsarm ausgeführt.

Eine Drehbegrenzungseinrichtung 40 gemäß Fig. 1 sperrt die rotatorische Bewegung des zweiten Lagerteils 7 um die Rotordrehachse DR, also den Rotationsfreiheitsgrad R_{Z}, ermöglicht aber eine Bewegung in den rotatorischen Freiheitsgraden R_{X} und R_{Y}. Bewegungsermittlungseinrichtungen 20 und 30, wie in Fig. 2 gezeigt, können vorgesehen sein.

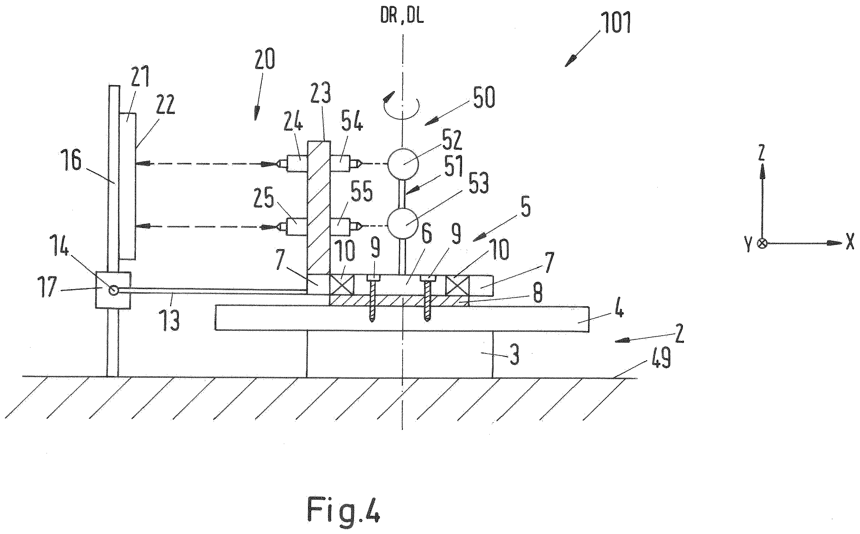

In Fig. 4 ist eine Anordnung 101 gezeigt, welche eine Einrichtung 50 zur Ermittlung eines Bewegungsfehlers des Drehlagers 5 aufweist. Gleiche Bezugszeichen im Vergleich zu früheren Abbildungen bedeuten in Fig. 4 gleiche Gegenstände. Im Unterschied zur Ausführungsform der Fig. 1 ist der Messkörper 21 in Form eines Spiegels ortsfest zu dem Stator 3 angebracht und die Abstandssensoren 24, 25 sind über den Träger 23 an dem zweiten Lagerteil 7 angebracht, sodass die Anordnung von Messkörper 21 und Messeinrichtung 24, 25 genau umgekehrt ist. Das Messprinzip zur Ermittlung translatorischer oder rotatorischer Fehler ist aber genauso wie zuvor beschrieben.

Weiterhin weist die Anordnung 101 die bereits erwähnte Einrichtung 50 zur Ermittlung eines Bewegungsfehlers des Drehlagers 5 auf. Auf dem ersten Lagerteil 6 ist der Messkörper 51 bewegungsfest angeordnet, der auch als Prüfkörper bezeichnet wird. Der Messkörper 51 weist die beiden Kugeln 52, 53 auf. Auf die Kugel 52 ist der Abstandssensor 54 gerichtet und auf die Kugel 53 der Abstandssensor 55. Die Messeinrichtungen 54, 55 in Form von Abstandssensoren sind bewegungsfest an dem zweiten Lagerteil 7 angeordnet.

Bewegungsfehler des Drehlagers 50 sind unerwünschte Bewegungen des ersten Lagerteils 6 und des zweiten Lagerteils 7 relativ zueinander, nämlich Bewegungen, die unterschiedlich sind zu einer Rotation beider Teile relativ zueinander um die Drehachse des Lagers DL. Ein rotatorischer Bewegungsfehler tritt beispielsweise auf, wenn das Lagerteil 6 relativ zu dem Lagerteil 7 um die Y-Achse verkippt oder umgekehrt betrachtet das äußere Lagerteil 7 relativ zu dem inneren Lagerteil 6 um die Y-Achse verkippt. Eine solche Verkippung, die einer Drehbewegung beider Lagerteile 6, 7 relativ zueinander um die Achse DL in der Regel überlagert ist, kann durch Auswertung des Abstands des Abstandssensors 54 zur Kugel 52 und durch Auswertung des Abstands des Abstandssensors 55 zur Kugel 53 ermittelt werden. In Blickrichtung des Betrachters können weitere Abstandssensoren jeweils auf die Kugel 52 und auf die Kugel 53 gerichtet sein, um einen rotatorischen Fehler beider Lagerteile 6, 7 relativ zueinander im Freiheitsgrad R_{X} zu ermitteln. Weiterhin kann mit den Abstandssensoren 54, 55 ein translatorischer Bewegungsfehler des Drehlagers 5 bzw. der Lagerteile 6 und 7 relativ zueinander in dem Freiheitsgrad T_{X} ermittelt werden. Ein translatorischer Fehler im Freiheitsgrad T_{Y} kann ermittelt werden mit Abstandssensoren, die in Blickrichtung des Betrachters auf die Kugeln gerichtet sind. Eine rotationssymmetrische Form des Prüfkörpers 51 wird gewählt, weil dieser zusammen mit dem Rotor 4 und dem ersten Lagerteil 6 um die Rotordrehachse DR rotiert wird. Bei der in Fig. 4 gezeigten Ausführungsform können Abstandsänderungen zwischen dem Abstandssensor 24 und dem Prüfkörper 21 und dem Abstandssensor 25 und dem Prüfkörper 21, die auf Bewegungsfehler des Lagers 5 zurückzuführen sind, von Bewegungsfehlern unterschieden werden, die der Drehvorrichtung 2 bzw. dem Rotor 4 zuzurechnen sind. Bei einem ideal fehlerfreien Drehlager 5 und ideal fehlerfreiem Prüfkörper 51 dürften bei der Bewegungsermittlungseinrichtung 50 keine Abstandsänderungen zwischen den Sensoren 54 und 55 und den Kugeln 52 und 53 auftreten. Treten solche Abstandsänderungen auf, so können diese mit den Messsignalen der Sensoren 24, 25 verrechnet werden, um Bewegungsfehler des Lagers 5 rechnerisch zu eliminieren.

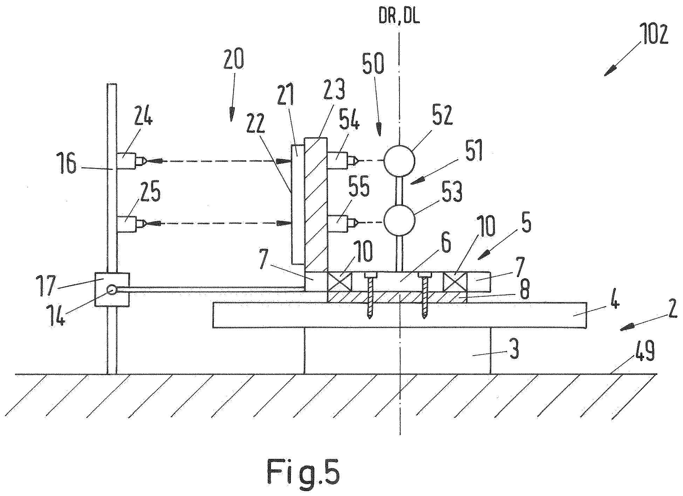

Fig. 5 zeigt eine Anordnung 102, die gegenüber der Anordnung aus Fig. 4 leicht abgewandelt ist. Die Anordnung der Abstandssensoren 24, 25 und des Messkörpers ist umgekehrt wie in Fig. 4, also die Abstandssensoren 24, 25 stationär am Untergrund 49 und stationär relativ zum Stator 3 und der Messkörper ist am zweiten Lagerteil 7 angebracht. Der Aufbau der Bewegungsermittlungseinrichtung 20 entspricht somit dem Aufbau wie in Fig. 1 gezeigt.

Bei den Anordnung nach Fig. 5 kann eine Baueinheit aus Lager 5, Halter 23, Spiegel 21, Sensoren 54, 55 und Prüfkörper 51 vormontiert werden und anschließend auf den Drehtisch 2 aufgesetzt werden. Die Sensoren 54, 55 werden bei der Vormontage so ausgerichtet, dass deren Messstrahl durch den Mittelpunkt der Kugeln 52, 53 verläuft. Durch die Flächigkeit des Spiegels 21 ist eine genaue Ausrichtung der vormontierten Einheit gegen die Sensoren 24 und 25 unkritisch. Der Spiegel 21 kann somit senkrecht zu den Messstrahlen der Sensoren 24, 25 verschoben werden, ohne das Messergebnis zu beeinflussen. Der Spiegel 21 muss somit nicht in Bezug auf die Sensoren 24, 25 zentriert sein. In analoger Weise kann bei einem Aufbau aus Fig. 4 eine vormontierte Einheit aus Lager 5, Halter 23, Sensoren 24, 25, Sensoren 54, 55 und Prüfkörper 51 gebildet werden, wobei die Sensoren 54, 55 bei der Vormontage so ausgerichtet werden, dass deren Messstrahl durch den Mittelpunkt der Kugeln 52, 53 verläuft. Die Ausrichtung relativ zum Spiegel 21 ist aufgrund der Flächigkeit des Spiegels ebenso unkritisch wie beim Aufbau der Fig. 5.

Wie beispielsweise auch bei der Anordnung 1 in Fig. 1 oder der Anordnung 100 in Fig. 2 kann auf dem Planspiegel 21 mit einem Autokollimator gemessen werden, um eine Verkippung des Spiegels und damit einen rotatorischen Bewegungsfehler zu erfassen. Alternativ zu einem Autokollimator ist der Einsatz eines Interferometers möglich. Im Allgemeinen ist es vorteilhaft, einen Messkörper mit planer Oberfläche, insbesondere einen Planspiegel 21 wie in Fig. 1, 2 und 5 gezeigt, an dem zweiten Lagerteil 7 anzubringen. Eine Messung auf dem Planspiegel mit einem Autokollimator oder Interferometer kann aus größerer Instanz erfolgen als es mit Abstandssensoren möglich ist. Daher können Messeinrichtungen wie ein Autokollimator oder ein Interferometer in großem Abstand angeordnet werden, was für den Aufbau einer Anordnung von Vorteil ist, insbesondere wenn der Raum zum Aufbau der Anordnung eng begrenzt ist oder der Raum um eine Drehvorrichtung eng begrenzt ist, beispielsweise wenn eine erfindungsgemäße Anordnung innerhalb eines Koordinatenmessgeräts aufgebaut werden soll.

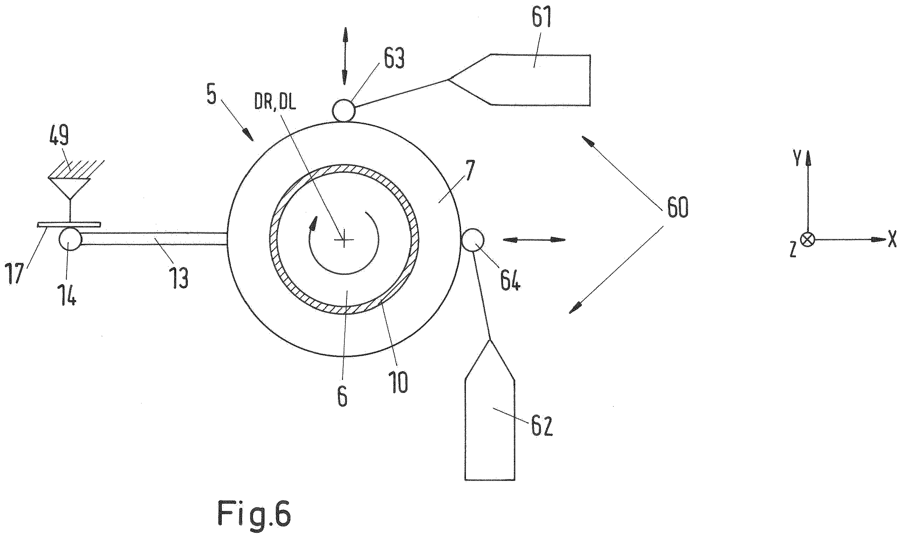

Fig. 6 zeigt eine alternative Ausführungsform einer Bewegungsermittlungseinrichtung 60. Fig. 6 zeigt keine vollständige Anordnung, sondern in gleicher Perspektive wie Fig. 2 einen Blick von oben in Richtung der Rotordrehachse auf das Drehlager 5 mit dem inneren Lagerteil 6 und dem äußeren Lagerteil 7. Nicht dargestellt ist die unter dem Lager 5 befindliche Drehvorrichtung 2. Dargestellt sind Teile der Drehbegrenzungseinrichtung, wie der Arm 13, die Anschlagskugel 14 und die Anschlagsplatte 17, die fest am Untergrund 49 verankert ist.

Mit einer Bewegungsermittlungseinrichtung 60 aus Fig. 6 werden translatorische Bewegungen des Lagers 5 und damit translatorische Bewegungen des mit dem Lagerteil 6 gekoppelten Rotors erfasst. Vorgesehen sind zwei Taster 61, 62. Die bewegliche Tastspitze 63 des Induktivtasters 61 liegt an dem äußeren Lagerteil 7 in Raumrichtung Y, betrachtet von der Drehachse DR als Ursprung, an. Bei Bewegung des äußeren Lagerteils 7 in Y-Richtung wird die Tastspitze 63 entsprechend bewegt und eine Translation in Y-Richtung in die eine oder andere Richtung, dargestellt mit einem Doppelpfeil, erfasst. In analoger Weise wird mit einer Tastspitze 64 eine Translation in X-Richtung erfasst.

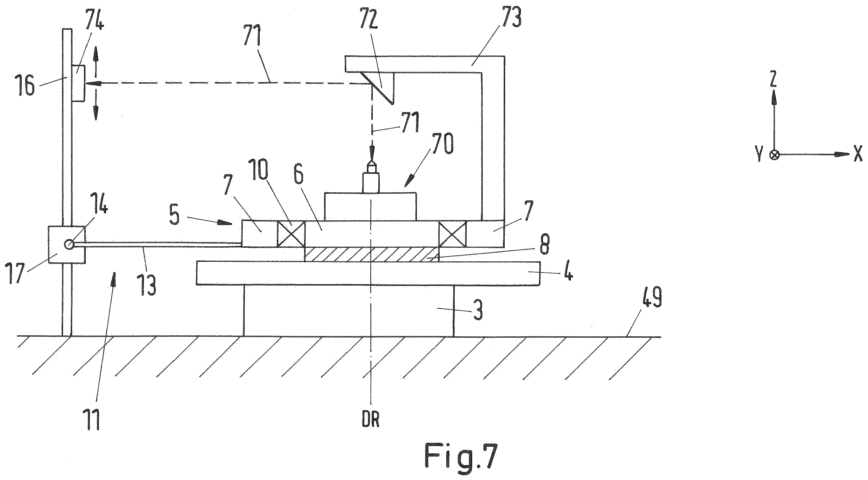

Fig. 7 zeigt eine Anordnung zur Erfassung einer Translation des Rotors 4 in Z-Richtung, also eine Translation in Richtung der Rotordrehachse RD. Die in Fig. 7 gezeigte Anordnung kann mit einer vorangehend beschriebenen erfindungsgemäßen Anordnung kombiniert werden. Auf dem inneren Lagerteil 6 ist ein Laser 70 angeordnet, der den Laserstrahl 71 erzeugt und nach oben aussendet. Der Laserstrahl 71 trifft auf den schräg stehenden Umlenkspiegel 72, der über den Galgen 73 an dem zweiten Lagerteil 7 befestigt ist. Das zweite Lagerteil 7 und der Galgen 73 und damit auch der Spiegel 72 werden durch die Drehbegrenzungseinrichtung 11, die zuvor bereits erläutert wurde, stationär gehalten. Der Laserstrahl 71 wird auf den optischen Positionssensor 74 (OPS, auch bezeichnet als Position Sensitive Detector, PSD) geleitet, der die Position des durch den Laserstrahl 71 erzeugten Lichtpunktes messen kann. Bei einer Translationsbewegung des Rotors 4 nach oben erfolgt auch eine Translation des Lasers 70 nach oben und des Spiegels 72 nach oben, da diese über das Drehlager 5 an dem Rotor 4 gekoppelt sind. Auf dem Positionssensor 74 wird also bei einer Translationsbewegung nach oben der Laserlichtpunkt nach oben bewegt und bei einer Translation des Rotors unten wird der Laserlichtpunkt auf dem Sensor 74 nach unten bewegt, was entsprechend erfasst werden kann. Anstelle eines Positionssensors kann eine Kamera in Kombination mit Bildauswertung, oder ein CCD Sensor verwendet werden.

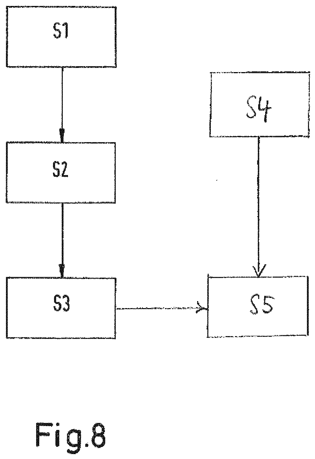

Fig. 8 zeigt einen erfindungsgemäßen Verfahrensablauf. Im Schritt S1 erfolgt ein Drehen des Rotors 4 der Drehvorrichtung 2 um die Rotordrehachse DR in eine Drehrichtung, beispielsweise im Uhrzeigersinn wie in Fig. 1 gezeigt. Das erste Lagerteil 6 wird gemeinsam mit dem Rotor 4 gedreht und die Rotation des zweiten Lagerteils 7 wird durch die Drehbegrenzungseinrichtung 11 (siehe Fig. 1) verhindert.

Bei der Drehung des Rotors 4 entstehen Bewegungsfehler, beispielsweise eine Rotation des Rotors um die nicht gewünschte Achse X oder Y, welche der Rotation um die Rotordrehachse DR überlagert ist. Ebenfalls können vorangehend erläuterte Translationsbewegungsfehler auftreten. Im Verfahrensschritt S2 wird die Bewegung des zweiten Lagerteils 7 mit der Bewegungsermittlungseinrichtung 20 (Fig. 1) ermittelt. Die Art und Weise der Ermittlung der Bewegung mittels Abstandssensoren 24, 25 und dem Spiegel 21 wurde bereits zuvor erläutert. In einem abschließenden Verfahrensschritt S3 wird der Bewegungsfehler des Drehtisches 2 aus der zuvor in Schritt S2 ermittelten Bewegung des zweiten Lagerteils 7 ermittelt.

Ein erfindungsgemäßes Verfahren zur Vermessung eines Werkstücks mit einem Koordinatenmessgerät weist zusätzlich zu Schritt S1, S2 und S3 die folgenden Schritte auf: Als Schritt S4 das Vermessen des Werkstücks mit einem Messsystem des Koordinatenmessgeräts, und als Schritt S5 das Auswerten und/oder Korrigieren von Messwerten, die aus dem Vermessen des Werkstücks erhalten werden, unter Verwendung des ermittelten oder erhaltenen Bewegungsfehlers der Drehvorrichtung.

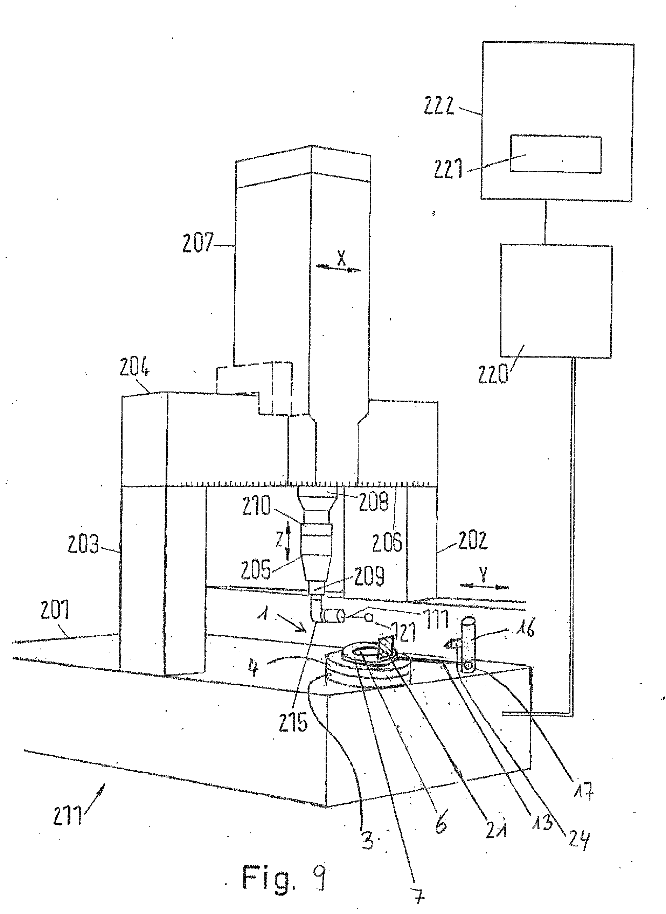

Bei Schritt S4 kann angenommen werden, dass der Messkörper 51 in Fig. 4 oder Fig. 5 kein Messkörper für eine Fehlerermittlung ist sondern ein Werkstück, dessen Koordinaten vermessen werden sollen. Das Werkstück wäre also auf dem ersten Lagerteil platziert, kann aber auch anderweitig drehbar mit dem Rotor 4 platziert sein. Das Werkstück kann selbstverständlich eine andere Form aufweisen. Die Anordnung 101 oder 102 ist im Messbereich eines Koordinatenmessgeräts platziert, wie in Fig. 9 gezeigt. Das Werkstück 51 wird mit dem Messsystem des KMG, insbesondere mit einem tastenden Messsystem durch Antasten vermessen. Die Vermessung erfolgt in verschiedenen Drehpositionen des Rotors 4, das Werkstück wird also gedreht. Das Werkstück kann bei Vermessung kontinuierlich gedreht werden oder bestimmte Drehpositionen können eingestellt werden und dann eine Vermessung erfolgen. Während Schritt S4 kann gleichzeitig Schritt S2 und S3 durchgeführt werden, wie oben beschrieben.

In Schritt S5 werden Messwerte aus Schritt S4, dem Vermessen des Werkstücks, um den in Schritt S3 ermittelten Bewegungsfehler des Drehtisches 2 korrigiert, was vorzugsweise rechnerisch erfolgt. In dem Verfahren können also die Ermittlung des Bewegungsfehlers des Drehtisches 2, das Vermessen eines Werkstücks und die Korrektur der Messwerte aus dem Vermessen des Werkstücks gleichzeitig erfolgen.

Das Antasten des Werkstücks erfolgt vorzugsweise aus einer Antastrichtung, die der Richtung der Messstrahlen (gestrichelter Doppelpfeil) zwischen den Sensoren 24, 25 und dem Spiegel 22 in Fig. 5 entspricht. Der Antastvektor ist vorzugsweise parallel zu den Messstrahlen oder fluchtend mit einem der Messstrahlen.

Das in Fig. 9 dargestellte Koordinatenmessgerät (KMG) 211 in Portalbauweise weist eine Basis 201 auf, über der Säulen 202, 203 in Y-Richtung eines kartesischen Koordinatensystems beweglich angeordnet sind. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht näher dargestellte Elektromotoren verursachen die Linearbewegung der Säulen 202, 203 in Y-Richtung, entlang der Y-Bewegungs-Achse. Dabei ist z. B. jeder der beiden Säulen 202, 203 ein Elektromotor zugeordnet. Der Querträger 204 ist mit einem Querschlitten 207 kombiniert, welcher luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querträgers 204 in X-Richtung, d.h. entlang der X-Bewegungs-Achse, wird durch einen weiteren Elektromotor angetrieben. An dem Querschlitten 207 ist eine in vertikaler Richtung bewegliche Pinole 208 gelagert, die an ihrem unteren Ende über eine Montageeinrichtung 210 und eine Drehvorrichtung 205 mit einer Koordinatenmesseinrichtung 209 verbunden ist. Die Koordinatenmesseinrichtung 209 weist ist einen abgewinkelten Tastkopf 215 auf, an dem ein Taststift 111 mit Tastkugel 121 abnehmbar angeordnet ist. Die Koordinatenmesseinrichtung 209 kann angetrieben durch einen weiteren Elektromotor relativ zu dem Querschlitten 207 in Z-Richtung, entlang der Z-Bewegungs-Achse, des kartesischen Koordinatensystems bewegt werden. Durch die Elektromotoren des KMG kann der Tastkopf 209 in dem Bereich unterhalb des Querträgers 204 in nahezu beliebige Positionen bewegt werden. Ferner kann die Drehvorrichtung 205 den Tastkopf 215 um die Z-Achse drehen, sodass der Taststift 111 in unterschiedliche Richtungen ausgerichtet werden kann.

Fig. 9 zeigt auf der Basis 201 eine Anordnung 1, die bereits anhand Fig. 1 beschrieben wurde. Gleiche Bezugszeichen weisen auf gleiche Gegenstände hin, die in Fig. 1 und vorangehenden Figuren erläutert wurden. Es sind nicht alle Elemente der Anordnung dargestellt. Es ist, in Abwandlung zu Fig. 9 möglich, Teile der Bewegungsermittlungseinrichtung außerhalb des KMG anzuordnen, wie beispielsweise den Halter 16 mit dem Sensor 24. In diesem Fall kann ein separater Anschlag für den Arm 13 an dem KMG vorgesehen sein. Es ist ebenfalls möglich, einen auf den Spiegel 21 gerichteten Autokollimator außerhalb des KMG anzuordnen. Eine Anordnung außerhalb des KMG kann neben der Basis 201 sein.

Dargestellt ist ferner eine Steuerung 220, die die Bewegung der beweglichen Teile des KMG entlang der Bewegungs-Achsen steuert. Die Steuerung ist eingerichtet zur Durchführung einer oder mehrerer der im allgemeinen Beschreibungsteil erläuterten Schritte: Vermessen des Werkstücks, oder Auswerten, Überwachen und/oder Korrigieren eines oder mehrerer Messsignale.

Der Messrechner 222 ist mit der Steuerung 220 zum Austausch von Informationen, wie zum Beispiel Befehlen und Statusmeldungen, verbunden. Der Rechner 222 weist den Speicher 222 auf, in dem beispielsweise ermittelte Bewegungsfehler des Drehtisches 2 gespeichert werden und von dort aus zur rechnerischen Korrektur herangezogen werden können.

## Patentansprüche

1. Anordnung (1, 100, 101, 102) zur Ermittlung eines Bewegungsfehlers einer Drehvorrichtung (2), aufweisend
- eine Drehvorrichtung, deren Bewegungsfehler ermittelt werden soll, aufweisend einen Rotor (4), der um eine Rotordrehachse (DR) drehbar ist, und einen Stator (3),
- ein Drehlager (5), aufweisend ein erstes Lagerteil (6) und ein zweites Lagerteil (7), die relativ zueinander drehbar sind, wobei das erste Lagerteil bewegungsfest an den Rotor (4) der Drehvorrichtung (2) gekoppelt ist und das zweite Lagerteil (7) relativ zu dem Rotor (4) der Drehvorrichtung drehbar ist,
- eine Drehbegrenzungseinrichtung (11, 40), mit der eine Rotation des zweiten Lagerteils (7) um die Rotordrehachse (RD) umkehrbar, verhinderbar oder verhindert ist,
- eine Bewegungsermittlungseinrichtung (20, 30, 60), eingerichtet zur Ermittlung einer Bewegung des zweiten Lagerteils (7) in zumindest einem Rotationsfreiheitsgrad, der von der Rotation um die Rotordrehachse verschieden ist, und/oder in zumindest einem Translationsfreiheitsgrad.

2. Anordnung nach Anspruch 1, wobei die Drehbegrenzungseinrichtung (11, 40) aufweist:
- ein erstes Drehbegrenzungselement (12, 41), das an dem zweiten Lagerteil (7) angeordnet ist,
- ein zweites Drehbegrenzungselement (15, 42), welches ortsfest zu dem Stator (3) der Drehvorrichtung (2) angeordnet ist,
wobei das erste Drehbegrenzungselement (12, 41) und das zweite Drehbegrenzungselement (15, 42) derart kontaktierbar sind oder derart in Kontakt sind, dass eine Rotation des zweiten Lagerteils um die Rotordrehachse verhinderbar oder verhindert ist.

3. Anordnung nach Anspruch 1 oder 2, wobei die Bewegungsermittlungseinrichtung folgende Elemente aufweist:
- einen Messkörper (21, 31),
- zumindest eine Messeinrichtung (24, 25, 34), die zur Messung einer Messgröße, welche einer relative Bewegung zwischen Messkörper (21, 31) und Messeinrichtung (24, 25, 34) ausdrückt, direkt oder indirekt auf den Messkörper (21, 31) gerichtet ist,
wobei entweder der Messkörper (21, 31) oder die zumindest eine Messeinrichtung (24, 25, 34) ortsfest zu dem Stator (3) der Drehvorrichtung (2) angeordnet ist und das andere Element der Bewegungsermittlungseinrichtung an das zweite Lagerteil (7) des Drehlagers gekoppelt ist.

4. Anordnung nach Anspruch 3, wobei der Messkörper (21, 31) eine plane Fläche (22, 32) aufweist, auf welche die Messeinrichtung (24, 25, 34) gerichtet ist.

5. Anordnung nach Anspruch 4, wobei die plane Fläche (22, 32) reflektierend ist.

6. Anordnung nach einem der Ansprüche 3-5, wobei die Messeinrichtung ausgewählt ist aus einem Abstandssensor (24, 25) oder einem Autokollimator, oder wenn mehrere Messeinrichtungen vorhanden sind, aus mehreren Abstandssensoren (24, 25) oder einer Kombination aus zumindest einem Abstandssensor und einem Autokollimator.

7. Anordnung nach einem der vorangehenden Ansprüche, wobei die Bewegungsermittlungseinrichtung (60) zumindest einen Taster (61, 62) aufweist, der das zweite Lagerteil (7) berührt.

8. Anordnung nach einem der vorangehenden Ansprüche, aufweisend eine Einrichtung (50) zur Ermittlung eines Bewegungsfehlers des Drehlagers (5), aufweisend
- einen Messkörper (51), der an dem ersten Lagerteil (6) bewegungsfest zu dem ersten Lagerteil (6) angebracht ist,
- zumindest eine Messeinrichtung (54, 55), die zur Messung einer Messgröße, welche eine relative Bewegung zwischen Messkörper und Messeinrichtung ausdrückt, direkt oder indirekt auf den Messkörper gerichtet ist.

9. Verfahren zur Ermittlung eines Bewegungsfehlers einer Drehvorrichtung, bei dem eine Anordnung eingesetzt wird, aufweisend:
- eine Drehvorrichtung (2), deren Bewegungsfehler ermittelt werden soll, aufweisend einen Rotor (4), der um eine Rotordrehachse (RD) drehbar ist, und einen Stator (3),
- ein Drehlager (5), aufweisend ein erstes Lagerteil (6) und ein zweites Lagerteil (7), die relativ zueinander drehbar sind, wobei das erste Lagerteil (6) bewegungsfest an den Rotor (4) der Drehvorrichtung (2) gekoppelt ist und das zweite Lagerteil (7) relativ zu dem Rotor (4) der Drehvorrichtung drehbar ist,
- eine Drehbegrenzungseinrichtung (11, 40),
- eine Bewegungsermittlungseinrichtung (20, 30, 60),
und wobei das Verfahren die folgenden Schritte aufweist:
- Drehen (S1) des Rotors (4) der Drehvorrichtung (2) um die Rotordrehachse (DR) in eine Drehrichtung, sodass eine Drehbewegung des ersten Lagerteils (6) gemeinsam mit dem Rotor (4) erfolgt, wobei mit der Drehbegrenzungseinrichtung eine Rotation des zweiten Lagerteils (7) um die Rotordrehachse verhindert wird,
- Ermitteln (S2) einer Bewegung des zweiten Lagerteils (7), die verschieden ist von einer Rotation um die Rotordrehachse (RD), mit der Bewegungsermittlungseinrichtung (20),
- Ermitteln (S3) oder Erhalten eines Bewegungsfehlers der Drehvorrichtung (2) aus der ermittelten Bewegung des zweiten Lagerteils (7).

10. Verfahren nach Anspruch 9, wobei eine Anordnung nach einem der Ansprüche 3 bis 6 eingesetzt wird und bei dem der Schritt des Ermittelns der Bewegung des zweiten Lagerteils aufweist:
Messen einer Messgröße, die eine relative Bewegung von Messkörper (21, 31) und
Messeinrichtung (24, 25, 34) ausdrückt, in verschiedenen Drehpositionen des Rotors.

11. Koordinatenmessgerät (211), aufweisend
- eine Drehvorrichtung (2), deren Bewegungsfehler ermittelt werden soll, aufweisend einen Rotor (4), der um eine Rotordrehachse (DR) drehbar ist, und einen Stator (3),
- ein Drehlager (5), aufweisend ein erstes Lagerteil (6) und ein zweites Lagerteil (7), die relativ zueinander drehbar sind, wobei das erste Lagerteil bewegungsfest an den Rotor (4) der Drehvorrichtung (2) gekoppelt ist und das zweite Lagerteil (7) relativ zu dem Rotor (4) der Drehvorrichtung drehbar ist,
- eine Drehbegrenzungseinrichtung (11, 40), mit der eine Rotation des zweiten Lagerteils (7) um die Rotordrehachse (RD) umkehrbar, verhinderbar oder verhindert ist.

12. Verfahren zur Vermessung eines Werkstücks mit einem Koordinatenmessgerät, wobei ein Koordinatenmessgerät eingesetzt wird, aufweisend eine Anordnung aufweisend,
- eine Drehvorrichtung (2) aufweisend einen Rotor (4), der um eine Rotordrehachse (RD) drehbar ist, und einen Stator (3),
- ein Drehlager (5), aufweisend ein erstes Lagerteil (6) und ein zweites Lagerteil (7), die relativ zueinander drehbar sind, wobei das erste Lagerteil (6) bewegungsfest an den Rotor (4) der Drehvorrichtung (2) gekoppelt ist und das zweite Lagerteil (7) relativ zu dem Rotor (4) der Drehvorrichtung drehbar ist,
- eine Drehbegrenzungseinrichtung (11, 40),
- eine Bewegungsermittlungseinrichtung (20, 30, 60),
und wobei das Verfahren die folgenden Schritte aufweist:
- Anordnen eines Werkstücks auf der Drehvorrichtung (2),
- Drehen (S1) des Rotors (4) der Drehvorrichtung (2) um die Rotordrehachse (DR) in eine Drehrichtung, sodass eine Drehung des Werkstücks erfolgt und eine Drehbewegung des ersten Lagerteils (6) gemeinsam mit dem Rotor (4) erfolgt, wobei mit der Drehbegrenzungseinrichtung eine Rotation des zweiten Lagerteils (7) um die Rotordrehachse verhindert wird,
- Ermitteln (S2) einer Bewegung des zweiten Lagerteils (7), die verschieden ist von einer Rotation um die Rotordrehachse (RD), mit der Bewegungsermittlungseinrichtung (20),
- Ermitteln (S3) oder Erhalten eines Bewegungsfehlers der Drehvorrichtung (2) aus der ermittelten Bewegung des zweiten Lagerteils (7),
- Vermessen (S4) des Werkstücks mit einem Messsystem des Koordinatenmessgeräts,
- Auswerten, Überwachen und/oder Korrigieren (S5) zumindest eines Messwerts, der aus dem Vermessen des Werkstücks erhalten wird, unter Verwendung des ermittelten oder erhaltenen Bewegungsfehlers der Drehvorrichtung (2).

13. Verfahren nach Anspruch 12, wobei
- das Messsystem des Koordinatenmessgeräts ein taktiles Messsystem ist
- die Bewegungsermittlungseinrichtung folgende Elemente aufweist:
- einen Messkörper (21, 31),
- zumindest eine Messeinrichtung (24, 25, 34), die direkt oder indirekt in einer Messrichtung auf den Messkörper (21, 31) gerichtet ist,
wobei entweder der Messkörper (21, 31) oder die zumindest eine Messeinrichtung (24, 25, 34) ortsfest zu dem Stator (3) der Drehvorrichtung (2) angeordnet ist und das andere Element der Bewegungsermittlungseinrichtung an das zweite Lagerteil (7) des Drehlagers gekoppelt ist,
und wobei bei dem Verfahren
- das Ermitteln der Bewegung des zweiten Lagerteils aufweist:
Messen der Messgröße, welche die relative Bewegung von Messkörper (21, 31) und Messeinrichtung (24, 25, 34) ausdrückt, in der Messrichtung,
- das Vermessen des Werkstücks derart erfolgt, dass das Werkstück mit dem taktilen Messsystem des Koordinatenmessgeräts in einer Antastrichtung angetastet wird, die der Messrichtung entspricht oder im Wesentlichen entspricht.

## Claims

1. Assembly (1, 100, 101, 102) for determining a movement error of a rotational device (2), having
- a rotational device whose movement error is to be determined, having a rotor (4), which can rotate about a rotor rotational axis (DR), and a stator (3),
- a rotary bearing (5) having a first bearing part (6) and a second bearing part (7) which can rotate relative to one another, wherein the first bearing part is coupled fixedly in terms of movement to the rotor (4) of the rotational device (2), and the second bearing part (7) can rotate relative to the rotor (4) of the rotational device,
- a rotation-limiting apparatus (11, 40) with which a rotation of the second bearing part (7) about the rotor rotational axis (RD) can be reversed, prevented or is prevented,
- a movement-determining apparatus (20, 30, 60), configured to determine a movement of the second bearing part (7) in at least one degree of freedom of rotation which is different from the rotation about the rotor rotational axis, and/or in at least one degree of freedom of translation.

2. Assembly according to Claim 1, wherein the rotation-limiting apparatus (11, 40) has:
- a first rotation-limiting element (12, 41) which is arranged on the second bearing part (7),
- a second rotation-limiting element (15, 42) which is arranged in a positionally fixed fashion with respect to the stator (3) of the rotational device (2),
wherein the first rotation-limiting element (12, 41) and the second rotation-limiting element (15, 42) can be contacted in such a way or are in contact in such a way that a rotation of the second bearing part about the rotor rotational axis can be prevented or is prevented.

3. Assembly according to Claim 1 or 2, wherein the movement-determining apparatus has the following elements:
- a measuring body (21, 31),
- at least one measuring apparatus (24, 25, 34) which is directed directly or indirectly towards the measuring body (21, 31) in order to measure a measurement variable which expresses a relative movement between measuring body (21, 31) and measuring apparatus (24, 25, 34),
wherein either the measuring body (21, 31) or the at least one measuring apparatus (24, 25, 34) is arranged in a positionally fixed fashion with respect to the stator (3) of the rotational device (2), and the other element of the movement-determining apparatus is coupled to the second bearing part (7) of the rotary bearing.

4. Assembly according to Claim 3, wherein the measuring body (21, 31) has a planar face (22, 32) towards which the measuring apparatus (24, 25, 34) is directed.

5. Assembly according to Claim 4, wherein the planar face (22, 32) is reflective.

6. Assembly according to one of Claims 3-5, wherein the measuring apparatus is selected from a distance sensor (24, 25) or an autocollimator, or if a plurality of measuring apparatuses are present it is selected from a plurality of distance sensors (24, 25) or a combination of at least one distance sensor and one autocollimator.

7. Assembly according to one of the preceding claims, wherein the movement-determining apparatus (60) has at least one probe sensing device (61, 62) which touches the second bearing part (7).

8. Assembly according to one of the preceding claims, having an apparatus (50) for determining a movement error of the rotary bearing (5), having
- a measuring body (51) which is attached to the first bearing part (6) so as to be fixed in terms of movement with respect to the first bearing part (6),
- at least one measuring apparatus (54, 55) which is directed directly or indirectly towards the measuring body in order to measure a measurement variable which expresses a relative movement between measuring body and measuring apparatus.

9. Method for determining a movement error of a rotational device, in which an assembly is used, having:
- a rotational device (2) whose movement error is to be determined, having a rotor (4) which can rotate about a rotor rotational axis (RD), and a stator (3),
- a rotary bearing (5) having a first bearing part (6) and a second bearing part (7) which can rotate relative to one another, wherein the first bearing part (6) is coupled fixedly in terms of movement to the rotor (4) of the rotational device (2), and the second bearing part (7) can rotate relative to the rotor (4) of the rotational device,
- a rotation-limiting apparatus (11, 40),
- a movement-determining apparatus (20, 30, 60), and wherein the method has the following steps:
- rotating (S1) the rotor (4) of the rotational device (2) about the rotor rotational axis (DR) in a rotational direction, so that a rotation movement of the first bearing part (6) occurs together with the rotor (4), wherein a rotation of the second bearing part (7) about the rotor rotational axis is prevented with the rotation-limiting apparatus,
- determining (S2) a movement of the second bearing part (7) which is different from a rotational about the rotor rotational axis (RD), with the movement-determining apparatus (20),
- determining (S3) or ascertaining a movement error of the rotational device (2) from the determined movement of the second bearing part (7).

10. Method according to Claim 9, wherein an assembly according to one of Claims 3 to 6 is used, and in which the step of determining the movement of the second bearing part comprises:
measuring, in various rotational positions of the rotor, a measurement variable which expresses a relative movement of measuring body (21, 31) and measuring apparatus (24, 25, 34).

11. Coordinate measuring device (211) having
- a rotational device (2) whose movement error is to be determined, having a rotor (4) which can rotate about a rotor rotational axis (DR), and a stator (3),
- a rotary bearing (5) having a first bearing part (6) and a second bearing part (7) which can rotate relative to one another, wherein the first bearing part is coupled fixedly in terms of movement to the rotor (4) of the rotational device (2), and the second bearing part (7) can rotate relative to the rotor (4) of the rotational device,
- a rotation-limiting apparatus (11, 40) with which a rotation of the second bearing part (7) about the rotor rotational axis (RD) can be reversed, prevented or is prevented.

12. Method for measuring a workpiece with a coordinate measuring device, wherein a coordinate measuring device is used, having an assembly having,
- a rotational device (2) having a rotor (4) which can rotate about a rotor rotational axis (RD), and a stator (3),
- a rotary bearing (5) having a first bearing part (6) and a second bearing part (7) which can rotate relative to one another, wherein the first bearing part (6) is coupled fixedly in terms of movement to the rotor (4) of the rotational device (2), and the second bearing part (7) can rotate relative to the rotor (4) of the rotational device,
- a rotation-limiting apparatus (11, 40),
- a movement-determining apparatus (20, 30, 60), and wherein the method has the following steps:
- arranging a workpiece on the rotational device (2),
- rotating (S1) the rotor (4) of the rotational device (2) about the rotor rotational axis (DR) in a rotational direction, so that a rotation of the workpiece takes place and a rotational movement of the first bearing part (6) takes place together with the rotor (4), wherein a rotation of the second bearing part (7) about the rotor rotational axis is prevented with the rotation-limiting apparatus,
- determining (S2) a movement of the second bearing part (7) which is different from a rotation about the rotor rotational axis (RD), with the movement-determining apparatus (20),
- determining (S3) or ascertaining a movement error of the rotational device (2) from the determined movement of the second bearing part (7),
- measuring (S4) the workpiece with a measuring system of the coordinate measuring device,
- evaluating, monitoring and/or correcting (S5) at least one measured value which is ascertained from the measurement of the workpiece, using the determined or ascertained movement error of the rotational device (2).

13. Method according to Claim 12, wherein
- the measuring system of the coordinate measuring device is a tactile measuring system
- the movement-determining apparatus has the following elements:
- a measuring body (21, 31),
- at least one measuring apparatus (24, 25, 34) which is directed directly or indirectly in a measuring direction towards the measuring body (21, 31),
wherein either the measuring body (21, 31) or the at least one measuring apparatus (24, 25, 34) is arranged in a positionally fixed fashion with respect to the stator (3) of the rotational device (2), and the other element of the movement-determining apparatus is coupled to the second bearing part (7) of the rotary bearing,
and wherein in the method
- the determination of the movement of the second bearing part comprises:
measuring the measurement variable, which expresses the relative movement of measuring body (21, 31) and measuring apparatus (24, 25, 34), in the measuring direction,
- the measurement of the workpiece takes place in such a way that the workpiece is touched with the tactile measuring system of the coordinate measuring device in a touching direction which corresponds, or essentially corresponds, to the measuring direction.

## Revendications

1. Système (1, 100, 101, 102) permettant de déterminer une erreur de mouvement d'un dispositif de rotation (2), comprenant
- un dispositif de rotation dont l'erreur de mouvement doit être déterminée, comprenant un rotor (4), qui est rotatif autour d'un axe de rotation de rotor (DR), et un stator (3),
- un palier de rotation (5), comprenant une première partie de palier (6) et une deuxième partie de palier (7), lesquelles sont rotatives l'une par rapport à l'autre, dans lequel la première partie de palier est accouplée de manière solidaire en mouvement au rotor (4) du dispositif de rotation (2) et la deuxième partie de palier (7) est rotative par rapport au rotor (4) du dispositif de rotation,
- un dispositif de limitation de rotation (11, 40), à l'aide duquel une rotation de la deuxième partie de palier (7) autour de l'axe de rotation de rotor (RD) peut être inversée, peut être empêchée ou est empêchée,
- un dispositif de détermination de mouvement (20, 30, 60), conçu pour déterminer un mouvement de la deuxième partie de palier (7) dans au moins un degré de liberté de rotation, qui est différent de la rotation autour de l'axe de rotation de rotor, et/ou dans au moins un degré de liberté de translation.

2. Système selon la revendication 1, dans lequel le dispositif de limitation de rotation (11, 40) comprend :
- un premier élément de limitation de rotation (12, 41) qui est disposé sur la deuxième partie de palier (7),
- un deuxième élément de limitation de rotation (15, 42), lequel est disposé de manière fixe par rapport au stator (3) du dispositif de rotation (2),
dans lequel le premier élément de limitation de rotation (12, 41) et le deuxième élément de limitation de rotation (15, 42) peuvent être mis en contact ou sont en contact de telle sorte qu'une rotation de la deuxième partie de palier autour de l'axe de rotation de rotor peut être empêchée ou est empêchée.

3. Système selon la revendication 1 ou 2, dans lequel le dispositif de détermination de déplacement comprend les éléments suivants :
- un corps de mesure (21, 31),
- au moins un dispositif de mesure (24, 25, 34) qui est orienté directement ou indirectement vers le corps de mesure (21, 31) pour la mesure d'une grandeur de mesure, laquelle exprime un mouvement relatif entre le corps de mesure (21, 31) et le dispositif de mesure (24, 25, 34),
dans lequel soit le corps de mesure (21, 31) soit ledit au moins un dispositif de mesure (24, 25, 34) est disposé de manière fixe par rapport au stator (3) du dispositif de rotation (2) et l'autre élément du dispositif de détermination de mouvement est accouplé à la deuxième partie de palier (7) du palier de rotation.

4. Système selon la revendication 3, dans lequel le corps de mesure (21, 31) comprend une surface plane (22, 32) vers laquelle le dispositif de mesure (24, 25, 34) est orienté.

5. Système selon la revendication 4, dans lequel la surface plane (22, 32) est réfléchissante.

6. Système selon l'une des revendications 3 à 5, dans lequel le dispositif de mesure est sélectionné à partir d'un capteur de distance (24, 25) ou d'un autocollimateur ou, lorsque plusieurs dispositifs de mesure sont présents, à partir de plusieurs capteurs de distance (24, 25) ou d'une combinaison d'au moins un capteur de distance et d'un autocollimateur.

7. Système selon l'une des revendications précédentes, dans lequel le dispositif de détermination de mouvement (60) comprend au moins un palpeur (61, 62) qui est en contact avec la deuxième partie de palier (7).

8. Système selon l'une des revendications précédentes, comprenant un dispositif (50) permettant de déterminer une erreur de mouvement du palier de rotation (5), comprenant
- un corps de mesure (51) qui est monté sur la première partie de palier (6) de manière solidaire en mouvement par rapport à la première partie de palier (6),
- au moins un dispositif de mesure (54, 55) qui est orienté directement ou indirectement vers le corps de mesure pour la mesure d'une grandeur de mesure, laquelle exprime un mouvement relatif entre le corps de mesure et le dispositif de mesure.

9. Procédé permettant de déterminer une erreur de mouvement d'un dispositif de rotation, dans lequel un système est utilisé, comprenant :
- un dispositif de rotation (2) dont l'erreur de mouvement doit être déterminée, comprenant un rotor (4), qui est rotatif autour d'un axe de rotation de rotor (RD), et un stator (3),
- un palier de rotation (5), comprenant une première partie de palier (6) et une deuxième partie de palier (7), lesquelles sont rotatives l'une par rapport à l'autre, dans lequel la première partie de palier (6) est accouplée de manière solidaire en mouvement au rotor (4) du dispositif de rotation (2) et la deuxième partie de palier (7) est rotative par rapport au rotor (4) du dispositif de rotation,
- un dispositif de limitation de rotation (11, 40),
- un dispositif de détermination de mouvement (20, 30, 60),
et dans lequel le procédé comprend les étapes suivantes :
- la rotation (S1) du rotor (4) du dispositif de rotation (2) autour de l'axe de rotation de rotor (DR) dans un sens de rotation, de sorte qu'un mouvement de rotation de la première partie de palier (6) s'effectue conjointement avec le rotor (4), dans lequel une rotation de la deuxième partie de palier (7) autour de l'axe de rotation de rotor est empêchée à l'aide du dispositif de limitation de rotation,
- la détermination (S2) d'un mouvement de la deuxième partie de palier (7), lequel mouvement est différent d'une rotation autour de l'axe de rotation de rotor (RD), à l'aide du dispositif de détermination de mouvement (20),
- la détermination (S3) ou l'obtention d'une erreur de mouvement du dispositif de rotation (2) à partir du mouvement déterminé de la deuxième partie de palier (7).

10. Procédé selon la revendication 9, dans lequel un système selon l'une des revendications 3 à 6 est utilisé et dans lequel l'étape de détermination du mouvement de la deuxième partie de palier comprend :
la mesure d'une grandeur de mesure, qui exprime un mouvement relatif du corps de mesure (21, 31) et du dispositif de mesure (24, 25, 34), dans différentes positions de rotation du rotor.

11. Appareil de mesure de coordonnées (211), comprenant
- un dispositif de rotation (2) dont l'erreur de mouvement doit être déterminée, comprenant un rotor (4), qui est rotatif autour d'un axe de rotation de rotor (DR), et un stator (3),
- un palier de rotation (5), comprenant une première partie de palier (6) et une deuxième partie de palier (7), lesquelles sont rotatives l'une par rapport à l'autre, dans lequel la première partie de palier est accouplée de manière solidaire en mouvement au rotor (4) du dispositif de rotation (2) et la deuxième partie de palier (7) est rotative par rapport au rotor (4) du dispositif de rotation,
- un dispositif de limitation de rotation (11, 40), à l'aide duquel une rotation de la deuxième partie de palier (7) autour de l'axe de rotation de rotor (RD) peut être inversée, peut être empêchée ou est empêchée.

12. Procédé de mesure d'une pièce à l'aide d'un appareil de mesure de coordonnées, dans lequel un appareil de mesure de coordonnées est utilisé, comprenant un système comprenant
- un dispositif de rotation (2) comprenant un rotor (4), qui est rotatif autour d'un axe de rotation de rotor (RD), et un stator (3),
- un palier de rotation (5), comprenant une première partie de palier (6) et une deuxième partie de palier (7), lesquelles sont rotatives l'une par rapport à l'autre, dans lequel la première partie de palier (6) est accouplée de manière solidaire en mouvement au rotor (4) du dispositif de rotation (2) et la deuxième partie de palier (7) est rotative par rapport au rotor (4) du dispositif de rotation,
- un dispositif de limitation de rotation (11, 40),
- un dispositif de détermination de mouvement (20, 30, 60),
et dans lequel le procédé comprend les étapes suivantes :
- la disposition d'une pièce sur le dispositif de rotation (2),
- la rotation (S1) du rotor (4) du dispositif de rotation (2) autour de l'axe de rotation de rotor (DR) dans un sens de rotation, de sorte qu'une rotation de la pièce s'effectue et qu'un mouvement de rotation de la première partie de palier (6) s'effectue conjointement avec le rotor (4), dans lequel une rotation de la deuxième partie de palier (7) autour de l'axe de rotation de rotor est empêchée à l'aide du dispositif de limitation de rotation,
- la détermination (S2) d'un mouvement de la deuxième partie de palier (7), lequel mouvement est différent d'une rotation autour de l'axe de rotation de rotor (RD), à l'aide du dispositif de détermination de mouvement (20),
- la détermination (S3) ou l'obtention d'une erreur de mouvement du dispositif de rotation (2) à partir du mouvement déterminé de la deuxième partie de palier (7),
- la mesure (S4) de la pièce à l'aide d'un système de mesure de l'appareil de mesure de coordonnées,
- l'évaluation, la surveillance et/ou la correction (S5) d'au moins une valeur de mesure qui est obtenue à partir de la mesure de la pièce, en utilisant l'erreur de mouvement, déterminée ou obtenue, du dispositif de rotation (2).

13. Procédé selon la revendication 12, dans lequel
- le système de mesure de l'appareil de mesure de coordonnées est un système de mesure tactile,
- le dispositif de détermination de mouvement comprend les éléments suivants :
- un corps de mesure (21, 31),
- au moins un dispositif de mesure (24, 25, 34) qui est orienté directement ou indirectement vers le corps de mesure (21, 31) dans une direction de mesure,
dans lequel soit le corps de mesure (21, 31) soit ledit au moins un dispositif de mesure (24, 25, 34) est disposé de manière fixe par rapport au stator (3) du dispositif de rotation (2) et l'autre élément du dispositif de détermination de mouvement est accouplé à la deuxième partie de palier (7) du palier de rotation,
et dans lequel, selon le procédé
- la détermination du mouvement de la deuxième partie de palier comprend :
la mesure de la grandeur de mesure, laquelle exprime le mouvement relatif du corps de mesure (21, 31) et du dispositif de mesure (24, 25, 34), dans la direction de mesure,
- la mesure de la pièce s'effectue de sorte que la pièce est palpée à l'aide du système de mesure tactile de l'appareil de mesure de coordonnées dans une direction de palpage qui correspond ou correspond sensiblement à la direction de mesure.
